# EUROPEAN PATENT APPLICATION

(11) **EP 4 012 797 A1**
(43) Date of publication of application: **15.06.2022**
(21) Application number: 21213493.6
(22) Date of filing: 09.12.2021
(51) Int. Cl.: H01M 4/04, H01M 4/131, H01M 4/1391, H01M 4/36, H01M 4/485

(54) **PRECURSOR SOLUTION, PRECURSOR POWDER, METHOD FOR PRODUCING ELECTRODE, AND ELECTRODE**

(30) Priority: 10.12.2020 JP 2020205352
(71) Applicant: Seiko Epson Corporation, Tokyo 160-8801 (JP)
(72) Inventor: YAMAMOTO, Hitoshi, Nagano, 392-8502 (JP); TERAOKA, Tsutomu, Nagano, 392-8502 (JP); TAKIGUCHI, Hiroshi, Nagano, 392-8502 (JP)
(74) Representative: Miller Sturt Kenyon

(57) **Abstract**

A precursor solution according to the present disclosure contains an organic solvent, a lithium oxoacid salt that shows solubility in the organic solvent, and an aluminum compound that shows solubility in the organic solvent. When a ratio between a content of aluminum and a content of lithium in a case of satisfying a stoichiometric formulation of the following compositional formula (1) is set as a reference, the content of lithium in the precursor solution is preferably 1.00 times or more and 1.20 times or less with respect to the reference.

LiAlO₂ (1)

## Description

The present application is based on, and claims priority from JP Application Serial Number 2020-205352, filed December 10, 2020, the disclosure of which is hereby incorporated by reference herein in its entirety.

### BACKGROUND

### 1. Technical Field

The present disclosure relates to a precursor solution, a precursor powder, a method for producing an electrode, and an electrode.

### 2. Related Art

Improvement of fast charging (charging at a high C rate), a high output, and cycle characteristics has been required for a secondary battery.

In particular, a lithium-ion secondary battery has characteristics such as a high energy density, excellent charge-discharge efficiency, a long service life, fast chargeability and dischargeability, large current dischargeability, and high versatility, and therefore is advantageous as compared with other secondary batteries.

In the past, a secondary battery, particularly a lithium-ion secondary battery had a problem that a byproduct is generated at a surface of an active material constituting an electrode during charging and discharging, and ions are eluted from an active material side so as to adversely affect the characteristics such as fast charging and discharging and cycle characteristics.

As a technique for solving such a problem, for example, JP-A-2017-103024 describes that a coating film of an Al-containing oxide is provided at a surface of lithium cobalt oxide that is a positive electrode active material.

However, it is required to enable charging and discharging at a higher rate in the future, and the like, whereas in the past technique, it was difficult to form a sufficiently dense and homogeneous coating film of an Al-containing oxide at a surface of an active material, and it was difficult to meet such a demand.

### SUMMARY

The present disclosure has been made for solving the above problems and can be realized as the following application examples.

A precursor solution according to an application example of the present disclosure includes: an organic solvent; a lithium oxoacid salt that shows solubility in the organic solvent; and an aluminum compound that shows solubility in the organic solvent.

In the precursor solution according to another application example of the present disclosure, when a ratio between a content of aluminum and a content of lithium in a case of satisfying a stoichiometric formulation of the following compositional formula (1) is set as a reference, the content of lithium in the precursor solution may be 1.00 times or more and 1.20 times or less with respect to the reference:

LiAlO₂ (1).

In the precursor solution according to another application example of the present disclosure, the aluminum compound may be at least one of a metal salt compound and an aluminum alkoxide.

In the precursor solution according to another application example of the present disclosure, an amount of moisture in the precursor solution may be 300 ppm or less.

In the precursor solution according to another application example of the present disclosure, the lithium oxoacid salt may be lithium nitrate.

In the precursor solution according to another application example of the present disclosure, the organic solvent may be nonaqueous and contains one type or two or more types selected from the group consisting of n-butyl alcohol, ethylene glycol monobutyl ether, butylene glycol, hexylene glycol, pentanediol, hexanediol, heptanediol, toluene, o-xylene, p-xylene, hexane, heptane, and octane.

A precursor powder according to an application example of the present disclosure includes multiple precursor particles constituted by a material containing an inorganic substance containing lithium, aluminum, and an oxoacid ion, wherein the precursor powder has an average particle diameter of 400 nm or less.

A precursor powder according to another application example of the present disclosure includes multiple precursor particles obtained by subjecting the precursor solution according to the application example of the present disclosure to a heating treatment.

The precursor powder according to another application example of the present disclosure may have an average particle diameter of 400 nm or less.

A method for producing an electrode according to an application example of the present disclosure includes: an organic solvent removal step of removing the organic solvent by heating the precursor solution according to the application example of the present disclosure; a molding step of molding a composition containing multiple precursor particles obtained through the organic solvent removal step, thereby obtaining a molded body; and a firing step of firing the molded body, wherein the composition to be subjected to the molding step contains active material particles.

The method for producing an electrode according to another application example of the present disclosure may further include an organic substance removal step of removing an organic substance contained in the composition obtained by removing the organic solvent from the precursor solution between the organic solvent removal step and the molding step.

In the method for producing an electrode according to another application example of the present disclosure, the composition to be subjected to the molding step may further contain the active material particles in addition to the precursor particles.

In the method for producing an electrode according to another application example of the present disclosure, the composition to be subjected to the molding step may contain particles having a coating layer formed at surfaces of the active material particles using the precursor solution according to the application example of the present disclosure as the precursor particles.

In the method for producing an electrode according to another application example of the present disclosure, the active material in the electrode obtained through the firing step may have a denseness of 60% or more.

An electrode according to an application example of the present disclosure is an electrode produced by the method for producing an electrode according to the application example of the present disclosure.

### BRIEF DESCRIPTION OF THE DRAWINGS

FIG. 1 is a schematic perspective view schematically showing a configuration of a lithium-ion secondary battery of a first embodiment.
FIG. 2 is a schematic cross-sectional view schematically showing a structure of the lithium-ion secondary battery of the first embodiment.
FIG. 3 is a schematic perspective view schematically showing a configuration of a lithium-ion secondary battery of a second embodiment.
FIG. 4 is a schematic cross-sectional view schematically showing a structure of the lithium-ion secondary battery of the second embodiment.
FIG. 5 is a schematic perspective view schematically showing a configuration of a lithium-ion secondary battery of a third embodiment.
FIG. 6 is a schematic cross-sectional view schematically showing a structure of the lithium-ion secondary battery of the third embodiment.

### DESCRIPTION OF EXEMPLARY EMBODIMENTS

Hereinafter, preferred embodiments of the present disclosure will be described in detail.

### [1] Precursor Solution

First, a precursor solution of the present disclosure will be described.

The precursor solution according to the present disclosure is a solution to be used for forming a material that coats a surface of an active material such as a positive electrode active material or a negative electrode active material in an electrode of a secondary battery, that is, a precursor solution of a material for coating an active material.

The precursor solution according to the present disclosure contains an organic solvent, a lithium oxoacid salt that shows solubility in the organic solvent, and an aluminum compound that shows solubility in the organic solvent.

According to this, in an electrode to be produced using the precursor solution, a surface of an active material can be favorably coated with a coating material constituted by a LiAl composite oxide such as lithium aluminate, more specifically, a surface of an active material can be densely and homogeneously coated with a coating material constituted by a LiAl composite oxide with high adhesion while favorably preventing the occurrence of an unintentional gap. In particular, by containing a lithium oxoacid salt, the melting point of a solid component obtained by removing the organic solvent from the precursor solution can be lowered. Accordingly, the precursor can be converted into a LiAl composite oxide having excellent adhesion to the surfaces of the active material particles, denseness, homogeneity, etc. while promoting crystal growth by a firing treatment that is a heat treatment at a relatively low temperature in a relatively short time. As a result, when it is applied to the active material particles, an effect of coating the surfaces of the active material particles with the Al-containing oxide, particularly, the LiAl composite oxide is remarkably exhibited, and it can be favorably applied to the production of a secondary battery having excellent charge-discharge characteristics, for example, charge-discharge characteristics at a high load.

In the present disclosure, the phrase "shows solubility" refers to showing a sufficiently high solubility, and specifically refers to showing a solubility in a solvent at 25°C of 50 g/100 g or more.

On the other hand, when such conditions are not satisfied, satisfactory results cannot be obtained. For example, when water is used in place of an organic solvent, elements constituting active material particles are dissolved in water, and an active material coated with a desired LiAl composite oxide cannot be obtained.

Even if an organic solvent is contained, when the organic solvent does not dissolve at least one of the lithium oxoacid salt and the aluminum compound in the precursor solution, only an active material coated with lithium carbonate or aluminum oxide is obtained, and the charge-discharge characteristics, for example, the charge-discharge characteristics at a high load are poor.

When the lithium oxoacid salt is not contained, the coating layer formed at the surface of the active material particle is constituted by an Al-containing oxide such as Al₂O₃ that is not a LiAl composite oxide such as lithium aluminate, and an effect as described above is not sufficiently obtained. Further, an unintentional gap is likely to occur between the active material particle and the coating layer, it is difficult to bring the active material particle and the coating layer into close contact with each other with high adhesion, and the denseness and homogeneity of the coating layer are also deteriorated.

When the aluminum compound is not contained, the coating layer formed at the surface of the active material particle becomes a lithium carbonate layer, and the charge-discharge characteristics, for example, the charge-discharge characteristics at a high load are poor.

### [1-1] Organic Solvent

The precursor solution according to the present disclosure contains an organic solvent.

The organic solvent may be any as long as it exhibits a function of dissolving a lithium oxoacid salt and an aluminum compound, each of which will be described in detail later, in the precursor solution according to the present disclosure, and examples thereof include alcohols, glycols, ketones, esters, ethers, organic acids, aromatics, amides, and aliphatic hydrocarbons, and one type or a mixed solvent that is a combination of two or more types selected from these can be used. Examples of the alcohols include methyl alcohol, ethyl alcohol, n-propyl alcohol, isopropyl alcohol, n-butyl alcohol, allyl alcohol, and 2-n-butoxyethanol. Examples of the glycols include ethylene glycol, propylene glycol, butylene glycol, hexylene glycol, pentanediol, hexanediol, heptanediol, and dipropylene glycol. Examples of the ketones include dimethyl ketone, methyl ethyl ketone, methyl propyl ketone, and methyl isobutyl ketone. Examples of the esters include methyl formate, ethyl formate, methyl acetate, and methyl acetoacetate. Examples of the ethers include diethylene glycol monomethyl ether, diethylene glycol monoethyl ether, diethylene glycol dimethyl ether, ethylene glycol monomethyl ether, ethylene glycol monoethyl ether, ethylene glycol monobutyl ether, and dipropylene glycol monomethyl ether. Examples of the organic acids include formic acid, acetic acid, 2-ethylbutyric acid, and propionic acid. Examples of the aromatics include toluene, o-xylene, and p-xylene. Examples of the amides include formamide, N,N-dimethylformamide, N,N-diethylformamide, dimethylacetamide, and N-methylpyrrolidone. Examples of the aliphatic hydrocarbons include hexane, heptane, and octane.

Above all, the organic solvent constituting the precursor solution according to the present disclosure is preferably an organic solvent that is nonaqueous and contains one type or two or more types selected from the group consisting of n-butyl alcohol, ethylene glycol monobutyl ether, butylene glycol, hexylene glycol, pentanediol, hexanediol, heptanediol, toluene, o-xylene, p-xylene, hexane, heptane, and octane.

According to this, the solubility of the lithium oxoacid salt and the aluminum compound as described in detail later can be made more excellent. Further, the organic solvent can be more effectively prevented from being unintentionally remaining in an electrode or a secondary battery to be produced using the precursor solution according to the present disclosure.

When the organic solvent constituting the precursor solution according to the present disclosure contains a component constituting the above-mentioned group, the organic solvent may further contain a solvent component that does not constitute the above-mentioned group, but the ratio of the component constituting the above-mentioned group to the total organic solvent constituting the precursor solution according to the present disclosure is preferably 60 mass% or more, more preferably 80 mass% or more, and further more preferably 90 mass% or more.

According to this, the above-mentioned effect is more remarkably exhibited.

The content of the organic solvent in the precursor solution according to the present disclosure is preferably 60 mass% or more and 99.7 mass% or less, and more preferably 80 mass% or more and 99.7 mass% or less.

### [1-2] Lithium Oxoacid Salt

The precursor solution according to the present disclosure contains a lithium oxoacid salt.

Such a lithium oxoacid salt may be any as long as it shows solubility in the organic solvent constituting the precursor solution.

Examples of an oxoanion constituting the lithium oxoacid salt include a halogen oxoacid ion, a borate ion, a carbonate ion, an orthocarbonate ion, a carboxylate ion, a silicate ion, a nitrite ion, a nitrate ion, a phosphite ion, a phosphate ion, an arsenate ion, a sulfite ion, a sulfate ion, a sulfonate ion, and a sulfinate ion. Examples of the halogen oxoacid ion include a hypochlorous ion, a chlorite ion, a chlorate ion, a perchlorate ion, a hypobromite ion, a bromite ion, a bromate ion, a perbromate ion, a hypoiodite ion, an iodite ion, an iodate ion, and a periodate ion.

The lithium oxoacid salt may be a composite salt.

Above all, the lithium oxoacid salt is preferably lithium nitrate.

According to this, while making the solubility in the organic solvent more excellent, the effect of lowering the melting point of a solid component obtained by removing the organic solvent from the precursor solution as described above is more remarkably exhibited, the precursor can be favorably converted into a LiAl composite oxide having particularly excellent adhesion to the surfaces of the active material particles, denseness, homogeneity, etc., and the charge-discharge characteristics of a secondary battery to be finally obtained can be made more excellent.

Further, when the lithium oxoacid salt constituting the precursor solution according to the present disclosure contains lithium nitrate, a lithium oxoacid salt other than lithium nitrate may be contained, but the ratio of lithium nitrate to the total lithium oxoacid salt constituting the precursor solution according to the present disclosure is preferably 60 mass% or more, more preferably 80 mass% or more, and further more preferably 90 mass% or more.

According to this, the above-mentioned effect is more remarkably exhibited.

The content of the lithium oxoacid salt in the precursor solution according to the present disclosure is preferably 0.04 mass% or more and 6.3 mass% or less, and more preferably 0.04 mass% or more and 4.2 mass% or less.

When the ratio between the content of aluminum and the content of lithium in a case of satisfying a stoichiometric formulation of the following compositional formula (1) is set as a reference, the content of lithium in the precursor solution is preferably 1.00 times or more and 1.20 times or less, more preferably 1.03 times or more and 1.17 times or less, and further more preferably 1.05 times or more and 1.15 times or less with respect to the reference.

LiAlO₂ (1)

According to this, the coating material constituted by a material containing a LiAl composite oxide obtained from the precursor solution can be made to have a more favorable composition, and an effect as described above can be more remarkably exhibited.

### [1-3] Aluminum Compound

The precursor solution according to the present disclosure contains an aluminum compound.

Such an aluminum compound may be any as long as it shows solubility in the organic solvent constituting the precursor solution, and examples thereof include metal salt compounds such as aluminum nitrate, aluminum nitrate hydrate, aluminum orthophosphate, aluminum sulfate, aluminum sulfate hydrate, aluminum chloride, aluminum chloride hydrate, aluminum bromide, aluminum iodide, and aluminum fluoride, aluminum alkoxides such as aluminum tri-sec-butoxide, aluminum trimethoxide, aluminum triethoxide, aluminum tri-n-propoxide, aluminum triisopropoxide, aluminum tri-n-butoxide, aluminum triisobutoxide, and aluminum tri-tert-butoxide, and one type or two or more types selected from these can be used in combination.

When the aluminum compound is a metal salt compound, the metal salt compound may be a composite salt containing aluminum.

Above all, the aluminum compound is preferably at least one of a metal salt compound and an aluminum alkoxide, more preferably one type or two or more types selected from the group consisting of aluminum nitrate, aluminum tri-sec-butoxide, aluminum triethoxide, aluminum tri-n-butoxide, aluminum tri-tert-butoxide, aluminum tri-n-propoxide, and aluminum triisopropoxide, and further more preferably at least one of aluminum nitrate and aluminum tri-sec-butoxide.

According to this, while making the solubility in the organic solvent more excellent, the precursor can be favorably converted into a LiAl composite oxide having particularly excellent adhesion to the surfaces of the active material particles, denseness, homogeneity, etc., and the charge-discharge characteristics of a secondary battery to be finally obtained can be made more excellent.

The content of the aluminum compound in the precursor solution according to the present disclosure is preferably 0.25 mass% or more and 25 mass% or less, and more preferably 0.25 mass% or more and 20 mass% or less.

### [1-4] Active Material Particle

The precursor solution according to the present disclosure contains the organic solvent, the lithium oxoacid salt, and the aluminum compound as described above, but may further contain particles of an active material such as a positive electrode active material or a negative electrode active material, that is, active material particles.

Even if the precursor solution according to the present disclosure does not contain the active material particles, an electrode including an active material can be favorably formed by mixing the precursor solution according to the present disclosure and the active material particles or by mixing a composition as an intermediate product obtained by subjecting the precursor solution according to the present disclosure to a treatment by the below-mentioned step and the active material particles in a method for producing an electrode as described later.

As the positive electrode active material, for example, a lithium composite oxide containing at least Li and constituted by any one or more types of elements selected from the group consisting of V, Cr, Mn, Fe, Co, Ni, and Cu, or the like can be used. Examples of such a composite oxide include LiCoO₂, LiNiO₂, LiMn₂O₄, Li₂Mn₂O₃, LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄. Further, as the positive electrode active material, for example, a fluoride such as LiFeF₃, a boride complex compound such as LiBH₄ or Li₄BN₃H₁₀, an iodine complex compound such as a polyvinylpyridine-iodine complex, a nonmetallic compound such as sulfur, or the like can also be used.

Examples of the negative electrode active material include Nb₂O₅, V₂O₅, TiO₂, In₂O₃, ZnO, SnO₂, NiO, ITO, AZO, GZO, ATO, FTO, and lithium composite oxides such as Li₄Ti₅O₁₂ and Li₂Ti₃O₇. Further, additional examples thereof include metals and alloys such as Li, Al, Si, Si-Mn, Si-Co, Si-Ni, Sn, Zn, Sb, Bi, In, and Au, carbon materials, and materials obtained by intercalation of lithium ions between layers of a carbon material such as LiC₂₄ and LiC₆.

The average particle diameter of the active material particles is preferably 1.0 µm or more and 30 µm or less, more preferably 2.0 µm or more and 25 µm or less, and further more preferably 3.0 µm or more and 20 µm or less.

According to this, the fluidity and ease of handling of the active material particles can be made more favorable. Further, the adhesion between the coating material constituted by the LiAl composite oxide and the active material particles can be made more excellent, and it becomes easy to adjust the ratio between the active material particles and the LiAl composite oxide in an electrode to be finally formed within a more favorable range. As a result, the charge-discharge characteristics of a secondary battery to be finally obtained can be made particularly excellent.

In this specification, the average particle diameter refers to a volume-based average particle diameter, and can be determined by, for example, subjecting a dispersion liquid prepared by adding a sample to methanol and dispersing the sample for 3 minutes using an ultrasonic disperser to measurement with a Coulter counter particle size distribution analyzer (model TA-II, manufactured by Coulter Electronics, Inc.) using an aperture of 50 µm.

When the precursor solution according to the present disclosure contains the active material particles, the content of the active material particles in the precursor solution according to the present disclosure is preferably 33 mass% or more and 90 mass% or less, and more preferably 50 mass% or more and 90 mass% or less.

### [1-5] Others

The precursor solution according to the present disclosure may contain components other than the above-mentioned components. Hereinafter, such components are also referred to as "other components".

As such other components to be contained in the precursor solution according to the present disclosure, for example, a conductive aid, a surfactant such as Triton X-100 or lithium dodecyl sulfate, or the like is exemplified.

The content of other components in the precursor solution according to the present disclosure is not particularly limited, but is preferably 10 mass% or less, more preferably 5.0 mass% or less, and further more preferably 0.5 mass% or less.

The precursor solution according to the present disclosure may contain multiple types of components as such other components. In this case, as a value of the content of such other components in the precursor solution according to the present disclosure, the sum of the contents thereof is adopted.

The amount of moisture in the precursor solution according to the present disclosure is preferably 300 ppm or less, more preferably 100 ppm or less, and further more preferably 50 ppm or less.

According to this, the life of the precursor solution is prolonged, and also a coating film with a higher quality can be formed.

As described above, the precursor solution according to the present disclosure may be any as long as it is a solution to be used for forming a material that coats the surfaces of the active material particles such as a positive electrode active material or a negative electrode active material, particularly a coating material constituted by a LiAl composite oxide such as lithium aluminate, but is preferably a solution to be used for forming a material that coats the surfaces of positive electrode active material particles, that is, a precursor solution of a material for coating a positive electrode active material.

According to this, the precursor can be favorably converted into a LiAl composite oxide having particularly excellent adhesion to the surfaces of the active material particles, denseness, homogeneity, etc., and the charge-discharge characteristics of a secondary battery to be finally obtained can be made more excellent.

The precursor solution according to the present disclosure can be favorably prepared by mixing the above-mentioned respective components.

### [2] Precursor Powder

Next, a precursor powder according to the present disclosure will be described.

The precursor powder according to the present disclosure includes multiple particles obtained by subjecting the above-mentioned precursor solution according to the present disclosure to a heating treatment, that is, multiple precursor particles. Such precursor particles contain a precursor of a LiAl composite oxide such as lithium aluminate, particularly contain an inorganic substance containing an oxoacid ion.

According to this, in an electrode to be produced using the precursor powder, the surface of the active material can be favorably coated with a coating material constituted by a LiAl composite oxide such as lithium aluminate, more specifically, the surface of the active material can be densely and homogeneously coated with a coating material constituted by a LiAl composite oxide with high adhesion while favorably preventing the occurrence of an unintentional gap. In particular, by containing an oxoacid ion, the melting point of the precursor powder can be lowered. Accordingly, the precursor can be converted into a LiAl composite oxide having excellent adhesion to the surfaces of the active material particles, denseness, homogeneity, etc. while promoting crystal growth by a firing treatment that is a heat treatment at a relatively low temperature in a relatively short time. As a result, when it is applied to the active material particles, an effect of coating the surfaces of the active material particles with an Al-containing oxide, particularly, a LiAl composite oxide is remarkably exhibited, and it can be favorably applied to the production of a secondary battery having excellent charge-discharge characteristics, for example, charge-discharge characteristics at a high load.

More specifically, the precursor powder according to the present disclosure can be obtained by a heating treatment in a step before a firing step in a method for producing an electrode which will be described in detail later.

The precursor powder according to the present disclosure is composed of multiple precursor particles constituted by a material containing an inorganic substance containing lithium, aluminum, and an oxoacid ion, that is, a precursor of a LiAl composite oxide, and has an average particle diameter, particularly, an average particle diameter of the precursor particles not including active material particles of 400 nm or less.

According to this, in an electrode to be produced using the precursor powder, the surface of the active material can be favorably coated with a coating material constituted by a LiAl composite oxide such as lithium aluminate, more specifically, the surface of the active material can be densely and homogeneously coated with a coating material constituted by a LiAl composite oxide with high adhesion while favorably preventing the occurrence of an unintentional gap. In particular, by containing an oxoacid ion, the melting point of the precursor powder can be lowered. Accordingly, the precursor can be converted into a LiAl composite oxide having excellent adhesion to the surfaces of the active material particles, denseness, homogeneity, etc. while promoting crystal growth by a firing treatment that is a heat treatment at a relatively low temperature in a relatively short time. As a result, when it is applied to the active material particles, an effect of coating the surfaces of the active material particles with an Al-containing oxide, particularly, a LiAl composite oxide is remarkably exhibited, and it can be favorably applied to the production of a secondary battery having excellent charge-discharge characteristics, for example, charge-discharge characteristics at a high load.

The average particle diameter of the precursor particles constituting the precursor powder according to the present disclosure, particularly the average particle diameter of the precursor particles not including the active material particles is preferably 400 nm or less, but more preferably 2 nm or more and 400 nm or less, and further more preferably 4 nm or more and 200 nm or less.

According to this, due to a so-called Gibbs-Thomson effect that is a phenomenon of lowering the melting point with an increase in surface energy, the melting temperature of the precursor particles can be more effectively lowered.

The precursor particles are preferably constituted by a substantially single crystal phase.

According to this, when an electrode is produced using the precursor powder according to the present disclosure, the precursor powder undergoes crystal phase transition substantially once, and therefore, segregation of elements accompanying the crystal phase transition orgeneration of a contaminant crystal by thermal decomposition is suppressed, so that various characteristics of the electrode to be produced are further improved.

In a case where only one exothermic peak is observed in a range of 300°C or higher and 1,000°C or lower when measurement is performed at a temperature raising rate of 10°C/min using TG-DTA for the precursor powder according to the present disclosure, it can be determined that "it is constituted by a substantially single crystal phase".

The crystal grain diameter of an oxide that is a precursor of a LiAl composite oxide is not particularly limited, but is preferably 10 nm or more and 200 nm or less, more preferably 15 nm or more and 180 nm or less, and further more preferably 20 nm or more and 160 nm or less.

The precursor powder according to the present disclosure, for example, may include the precursor particles constituted substantially only by the precursor of the LiAl composite oxide, that is, particles constituted by a substantially single crystal phase and the active material particles, or may include the precursor particles in which a coating layer composed substantially only of the precursor of the LiAl composite oxide is provided at the surfaces of the active material particles, or these particles may exist in a mixed state.

When the precursor powder according to the present disclosure includes active material particles, the active material particles preferably satisfy the conditions described in the above [1-4].

When the precursor particle includes an active material particle, a material containing the precursor of the LiAl composite oxide coats at least a part of the surface of the active material particle. In other words, in such a case, the precursor particle has the active material particle and a coating layer constituted by a material containing the precursor of the LiAl composite oxide that coats at least a part of the surface of the active material particle. In such a precursor particle, the average thickness of the coating layer constituted by the material containing the precursor of the LiAl composite oxide is preferably 2 nm or more and 300 nm or less, more preferably 3 nm or more and 150 nm or less, and further more preferably 4 nm or more and 80 nm or less.

According to this, an effect as described above is more remarkably exhibited, and the charge-discharge performance, for example, the charge-discharge performance at a high load of a lithium-ion secondary battery to which the precursor powder is applied can be made more excellent.

In this specification, the average thickness of the coating layer refers to the thickness of the coating layer determined when it is calculated from the specific gravity based on the mass of the active material particles included in the entire precursor powder and the mass of the precursor of the LiAl composite oxide while assuming that each active material particle has a spherical shape with the same diameter as the average particle diameter, and the coating layer having a uniform thickness is formed at the entire outer surface of each active material particle.

Further, when the average particle diameter of the active material particles is represented by D [µm] and the average thickness of the coating layer constituted by the material containing the precursor of the LiAl composite oxide is represented by T [µm], it is preferred to satisfy a relationship: 0.0005 ≤ T/D ≤ 0.2500, it is more preferred to satisfy a relationship: 0.0005 ≤ T/D ≤ 0.0700, and it is further more preferred to satisfy a relationship: 0.0010 ≤ T/D ≤ 0.0200.

According to this, an effect as described above is more remarkably exhibited, and the charge-discharge performance, for example, the charge-discharge performance at a high load of a lithium-ion secondary battery to which the precursor powder is applied can be made more excellent.

When the precursor particle has the active material particle and the coating layer constituted by the material containing the precursor of the LiAl composite oxide, the coating layer need only coat at least a part of the surface of the active material particle, but preferably satisfies the following conditions. That is, the coverage of the coating layer to the outer surface of the active material particle, that is, the ratio of the area of a portion coated with the coating layer of the active material particle to the total area of the outer surface thereof is preferably 2% or more, more preferably 5% or more, and further more preferably 10% or more. Further, the upper limit of the coverage may be either 100% or less than 100%.

According to this, an effect as described above is more remarkably exhibited, and the charge-discharge performance, for example, the charge-discharge performance at a high load of a lithium-ion secondary battery to which the precursor powder is applied can be made more excellent.

The content of the oxoacid ion in the precursor of the LiAl composite oxide constituting the precursor powder according to the present disclosure is not particularly limited, but is preferably 0.1 mass% or more and 30 mass% or less, and more preferably 0.1 mass% or more and 20 mass% or less.

According to this, the above-mentioned effect is more remarkably exhibited.

The precursor powder according to the present disclosure may contain components other than the precursor of the LiAl composite oxide and the active material particles, but the content of such components is preferably 10 mass% or less, more preferably 5.0 mass% or less, and further more preferably 0.5 mass% or less.

### [3] Method for Producing Electrode

A method for producing an electrode according to the present disclosure includes an organic solvent removal step of removing an organic solvent by heating the above-mentioned precursor solution according to the present disclosure, a molding step of molding a composition containing multiple precursor particles obtained through the organic solvent removal step, thereby obtaining a molded body, and a firing step of firing the molded body. Then, the composition to be subjected to the molding step contains active material particles.

According to this, the method for producing an electrode that can be favorably applied to the production of a secondary battery having excellent charge-discharge characteristics can be provided.

In particular, in this embodiment, the method further includes an organic substance removal step of removing an organic substance contained in the composition obtained by removing the organic solvent from the precursor solution between the organic solvent removal step and the molding step, and a griding step of griding the composition obtained by the organic substance removal step.

### [3-1] Organic Solvent Removal Step

In the organic solvent removal step, an organic solvent is removed by heating the above-mentioned precursor solution according to the present disclosure.

In this step, it is only necessary to remove at least a portion of the organic solvent contained in the precursor solution, and it is not necessary to remove all the organic solvent. Even if not all the organic solvent is removed in this step, the remaining organic solvent can be sufficiently removed in a later step.

In this step, it is preferred to remove 80 mass% or more, more preferably 90 mass% or more, and further more preferably 95 mass% or more of the entire organic solvent contained in the precursor solution.

This step can be more favorably performed by performing a heat treatment.

In this case, the conditions of the heat treatment depend on the boiling point or the vapor pressure of the organic solvent or the like, but the heating temperature in the heat treatment is preferably 50°C or higher and 250°C or lower, more preferably 60°C or higher and 230°C or lower, and further more preferably 80°C or higher and 200°C or lower.

Further, the heating time in the heat treatment is preferably 10 minutes or more and 180 minutes or less, and more preferably 20 minutes or more and 120 minutes or less.

The heat treatment in this step may be performed at a constant temperature or by changing the temperature during the course of the treatment.

For example, in this step, after a first heat treatment is performed at a temperature lower than the boiling point of the organic solvent constituting the precursor solution, a second heat treatment may be performed at a temperature higher than the boiling point of the organic solvent.

According to this, while favorably preventing bumping or the like during this step, the organic solvent can be efficiently removed as a whole, and the content of the organic solvent in the composition to be obtained at the end of this step can be further reduced.

The heat treatment may be performed in any atmosphere, and may be performed in an oxidizing atmosphere such as in the air or in an oxygen gas atmosphere, or may be performed in a non-oxidizing atmosphere of an inert gas such as nitrogen gas, helium gas, or argon gas, or the like. Further, the heat treatment may be performed under reduced pressure or vacuum, or under pressure.

Further, during the heat treatment, the atmosphere may be maintained under substantially the same conditions, or may be changed to different conditions.

Further, in this step, treatments as described above may be performed in combination.

Further, before or during this step, the precursor solution according to the present disclosure and the active material particles may be mixed. In such a case, the active material particles to be mixed preferably satisfy conditions as described in the above [1-4].

### [3-2] Organic Substance Removal Step

In the organic substance removal step, an organic substance contained in the composition obtained by removing the organic solvent from the precursor solution is removed.

In this manner, by including the organic substance removal step of removing an organic substance contained in the composition obtained by removing the organic solvent from the precursor solution between the organic solvent removal step and the molding step, the organic substance can be more effectively prevented from unintentionally remaining in an electrode to be finally formed, and the reliability and the charge-discharge characteristics of a secondary battery can be made more excellent.

As the organic substance to be removed in this step, for example, the organic solvent remaining after the organic solvent removal step, an organic compound derived from an atomic group including a carbon atom in the lithium oxoacid salt or the aluminum compound, and the like are exemplified.

In this step, it is only necessary to remove at least a portion of the organic substance contained in the composition obtained by removing the organic solvent from the precursor solution, and it is not necessary to remove all the organic substance. Even if not all the organic substance is removed in this step, the remaining organic substance can be sufficiently removed in a later step.

This step is preferably performed so that the content of the organic substance in the composition obtained at the end of this step is 0.1 mass% or less, and more preferably 0.05 mass% or less.

This step can be more favorably performed by performing a heat treatment.

The heat treatment in this step may be performed under fixed conditions or by combining different conditions.

The heating temperature in this step is preferably 300°C or higher and 600°C or lower, more preferably 330°C or higher and 570°C or lower, and further more preferably 350°C or higher and 570°C or lower.

Further, the heating time in this step is preferably 5 minutes or more and 240 minutes or less, more preferably 10 minutes or more and 180 minutes or less, and further more preferably 15 minutes or more and 120 minutes or less.

The heat treatment in this step may be performed in any atmosphere, and may be performed in an oxidizing atmosphere such as in the air or in an oxygen gas atmosphere, or may be performed in a non-oxidizing atmosphere of an inert gas such as nitrogen gas, helium gas, or argon gas, or the like. Further, this step may be performed under reduced pressure or vacuum, or under pressure. In particular, this step is preferably performed in an oxidizing atmosphere.

Further, during the heat treatment, the atmosphere may be maintained under substantially the same conditions, or may be changed to different conditions.

Further, in this step, treatments as described above may be performed in combination.

Further, before this step, the composition to be subjected to this step and the active material particles may be mixed. In such a case, the active material particles to be mixed preferably satisfy conditions as described in the above [1-4].

### [3-3] Grinding Step

In the grinding step, the composition obtained by the organic substance removal step is ground.

By doing this, a composition containing the precursor powder according to the present disclosure can be obtained. In particular, the composition to be subjected to the subsequent molding step can be configured to include the precursor particles having a more favorable size, and the molding step can be more favorably performed. As a result, the reliability of an electrode and a secondary battery to be finally obtained can be made more excellent.

The griding of the composition in this step can be performed using, for example, an agate mortar.

Further, before this step, the composition to be subjected to this step and the active material particles may be mixed. In such a case, the active material particles to be mixed preferably satisfy conditions as described in the above [1-4].

### [3-4] Molding Step

In the molding step, the composition containing multiple precursor particles obtained through the organic solvent removal step is molded, thereby obtaining a molded body. In particular, in this embodiment, the molded body is obtained by molding the composition containing the precursor particles obtained through the organic substance removal step and the griding step after the organic solvent removal step.

Further, in this step, the composition to be subjected to this step and the active material particles may be mixed. In such a case, the active material particles to be mixed preferably satisfy conditions as described in the above [1-4].

The composition to be subjected to this step may include the active material particles in addition to the precursor particles.

Further, the composition to be subjected to this step may include particles having a coating layer formed at the surfaces of the active material particles using the precursor solution according to the present disclosure as the precursor particles.

This step can be favorably performed by, for example, pressurizing the composition containing multiple precursor particles obtained through the organic solvent removal step.

The pressure when pressurizing the composition in this step is not particularly limited, but is preferably 300 MPa or more and 1,000 MPa or less, and more preferably 400 MPa or more and 900 MPa or less.

Further, the temperature during the molding in this step is not particularly limited, but is preferably 700°C or higher and 1,000°C or lower, and more preferably 750°C or higher and 900°C or lower.

The shape of the molded body to be formed in this step is not particularly limited, but is generally a shape corresponding to an electrode to be produced.

### [3-5] Firing Step

In the firing step, the molded body is fired. By doing this, an electrode is obtained.

The composition to be subjected to the firing step generally contains an oxoacid ion derived from the precursor solution according to the present disclosure used as a raw material.

The heating temperature in this step is not particularly limited, but is preferably 700°C or higher and 1,000°C or lower, more preferably 730°C or higher and 980°C or lower, and further more preferably 750°C or higher and 950°C or lower.

According to this, an electrode having desired characteristics can be more stably formed. Further, by performing firing at a relatively low temperature in this manner, for example, volatilization of lithium ions or the like can be more favorably suppressed, and an effect capable of producing an all-solid-state battery having an excellent battery capacity at a high load is obtained. Further, this is preferred not only from the viewpoint of being able to make the productivity of an electrode or a secondary battery including the electrode higher, but also from the viewpoint of energy saving.

The heating time in this step is not particularly limited, but is preferably 5 minutes or more and 300 minutes or less, more preferably 10 minutes or more and 120 minutes or less, and further more preferably 15 minutes or more and 60 minutes or less.

According to this, an electrode having desired characteristics can be more stably formed. Further, by performing firing in a relatively short time in this manner, for example, volatilization of lithium ions or the like can be more favorably suppressed, and an effect capable of producing an all-solid-state battery having an excellent battery capacity at a high load is obtained. Further, this is preferred not only from the viewpoint of being able to make the productivity of an electrode or a secondary battery including the electrode higher, but also from the viewpoint of energy saving.

This step may be performed in any atmosphere, and may be performed in an oxidizing atmosphere such as in the air or in an oxygen gas atmosphere, or may be performed in a non-oxidizing atmosphere of an inert gas such as nitrogen gas, helium gas, or argon gas, or the like. Further, this step may be performed under reduced pressure or vacuum, or under pressure. In particular, this step is preferably performed in an oxidizing atmosphere.

Further, during this step, the atmosphere may be maintained under substantially the same conditions, or may be changed to different conditions.

The electrode obtained as described above generally does not substantially contain the oxoacid ion contained in the precursor solution according to the present disclosure used as a raw material. More specifically, the content of the oxoacid ion in the electrode obtained as described above is generally 100 ppm or less, particularly preferably 50 ppm or less, and more preferably 10 ppm or less.

According to this, the content of unpreferred impurities in the electrode can be suppressed, and the characteristics and the reliability of an electrode or a secondary battery can be made more excellent.

The denseness of the active material in the electrode obtained through this step is preferably 60% or more, and more preferably 60% or more and 80% or less.

According to this, an electron conduction path and a lithium ion conduction path can be more favorably ensured, and the charge-discharge characteristics, for example, the charge-discharge characteristics at a high load can be made particularly excellent.

In this specification, the denseness of the active material in the electrode refers to the ratio between the true density of the coated active material and the density calculated from the shape and weight of the actual electrode.

### [4] Secondary Battery

Next, a secondary battery to which the present disclosure is applied will be described.

A secondary battery according to the present disclosure includes an electrode formed using the precursor solution according to the present disclosure as described above, and can be produced, for example, by applying the above-mentioned method for producing an electrode.

Such a secondary battery has a small internal resistance and excellent charge-discharge characteristics.

In the secondary battery according to the present disclosure, for example, the electrode formed using the precursor solution according to the present disclosure may be only a positive electrode, or only a negative electrode, or both a positive electrode and a negative electrode.

### [4-1] Secondary Battery of First Embodiment

Hereinafter, a lithium-ion secondary battery as a secondary battery according to a first embodiment will be described.

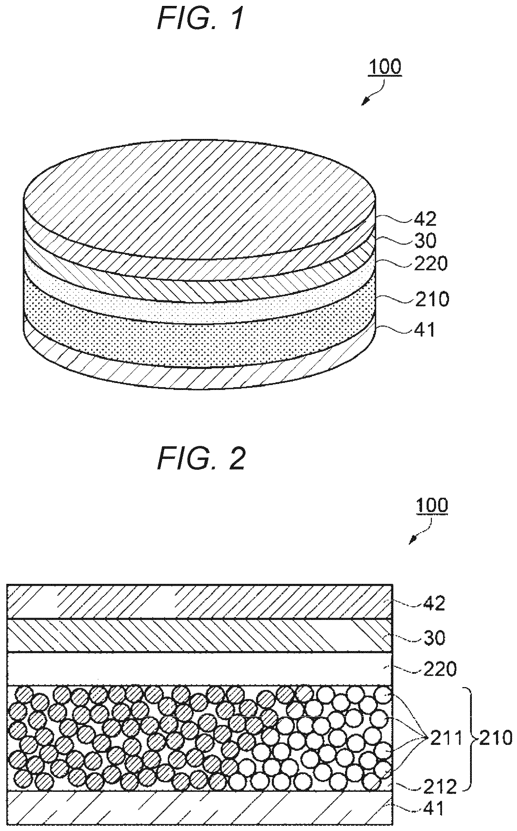

FIG. 1 is a schematic perspective view schematically showing a configuration of the lithium-ion secondary battery of the first embodiment, and FIG. 2 is a schematic cross-sectional view schematically showing a structure of the lithium-ion secondary battery of the first embodiment.

As shown in FIG. 1, a lithium-ion secondary battery 100 of this embodiment includes a positive electrode composite material 210 that functions as a positive electrode, and a solid electrolyte layer 220 and a negative electrode 30, which are sequentially stacked on the positive electrode composite material 210. The lithium-ion secondary battery 100 further includes a current collector 41 in contact with the positive electrode composite material 210 at an opposite face side of the positive electrode composite material 210 from a face thereof facing the solid electrolyte layer 220, and includes a current collector 42 in contact with the negative electrode 30 at an opposite face side of the negative electrode 30 from a face thereof facing the solid electrolyte layer 220. The positive electrode composite material 210, the solid electrolyte layer 220, and the negative electrode 30 are all constituted by a solid phase, and therefore, the lithium-ion secondary battery 100 is a chargeable and dischargeable all-solid-state battery.

The shape of the lithium-ion secondary battery 100 is not particularly limited, and may be, for example, a polygonal disk shape or the like, but is a circular disk shape in the configuration shown in the drawing. The size of the lithium-ion secondary battery 100 is not particularly limited, but for example, the diameter of the lithium-ion secondary battery 100 is, for example, 10 mm or more and 20 mm or less, and the thickness of the lithium-ion secondary battery 100 is, for example, 0.1 mm or more and 1.0 mm or less.

When the lithium-ion secondary battery 100 is small and thin in this manner, together with the fact that it is chargeable and dischargeable and is in an all solid state, it can be favorably used as a power supply of a portable information terminal such as a smartphone. The lithium-ion secondary battery 100 may be used for a purpose other than the power supply of a portable information terminal as described later.

Hereinafter, the respective configurations of the lithium-ion secondary battery 100 will be described.

### [4-1-1] Positive Electrode Composite Material

As shown in FIG. 2, the positive electrode composite material 210 in the lithium-ion secondary battery 100 includes positive electrode active material particles 211 as active material particles, and a LiAl composite oxide 212 formed using the precursor solution according to the present disclosure. In such a positive electrode composite material 210, the battery reaction rate in the lithium-ion secondary battery 100 can be further increased by increasing an interfacial area where the positive electrode active material particles 211 and the LiAl composite oxide 212 are in contact with each other.

The positive electrode active material particles 211 preferably satisfy the conditions described in the above [1-4].

When the average particle diameter of the positive electrode active material particles 211 is a value within the above-mentioned range, it becomes easy to achieve both an actual capacity density close to the theoretical capacity of the positive electrode active material particles 211 and a high charge-discharge rate.

The particle size distribution of the positive electrode active material particles 211 is not particularly limited, and for example, in the particle size distribution having one peak, the half width of the peak can be set to 0.15 µm or more and 19 µm or less. Further, the particle size distribution of the positive electrode active material particles 211 may have two or more peaks.

In FIG. 2, the shape of the positive electrode active material particle 211 is shown as a spherical shape, however, the shape of the positive electrode active material particle 211 is not limited to a spherical shape, and it can have various shapes, for example, a columnar shape, a plate shape, a scaly shape, a hollow shape, an indefinite shape, and the like, and further, two or more types among these may be mixed.

When the content of the positive electrode active material particles 211 in the positive electrode composite material 210 is represented by XA [mass%] and the content of the LiAl composite oxide 212 in the positive electrode composite material 210 is represented by XS [mass%], it is preferred to satisfy a relationship: 0.0004 ≤ XS/XA ≤ 0.005, and it is more preferred to satisfy a relationship: 0.0006 ≤ XS/XA ≤ 0.004.

Further, the positive electrode composite material 210 may include a conductive aid, a binder, or the like other than the positive electrode active material particles 211 and the LiAl composite oxide 212.

As the conductive aid, any material may be used as long as it is an electrical conductor whose electrochemical interaction can be ignored at a positive electrode reaction potential, and more specifically, for example, a carbon material such as acetylene black, Ketjen black, or a carbon nanotube, a noble metal such as palladium or platinum, an electrically conductive oxide such as SnO₂, ZnO, RuO₂, ReO₃, or Ir₂O₃, or the like can be used.

The thickness of the positive electrode composite material 210 is not particularly limited, but is preferably 1.1 µm or more and 500 µm or less, and more preferably 2.5 µm or more and 100 µm or less.

As a method for forming the positive electrode composite material 210, for example, a green sheet method, a press firing method, a cast firing method, or the like is exemplified. For the purpose of improving the adhesion between the positive electrode composite material 210 and the solid electrolyte layer 220, or improving the output or battery capacity of the lithium-ion secondary battery 100 by an increase in specific surface area, or the like, for example, a three-dimensional pattern structure such as a dimple, trench, or pillar pattern may be formed at the surface of the positive electrode composite material 210 in contact with the solid electrolyte layer 220.

### [4-1-2] Solid Electrolyte Layer

Examples of a constituent material of the solid electrolyte layer 220 include crystalline and amorphous materials of various types of oxide solid electrolytes, sulfide solid electrolytes, nitride solid electrolytes, halide solid electrolytes, hydride solid electrolytes, dry polymer electrolytes, and quasi-solid electrolytes, and one type or two or more types selected from these can be used in combination.

Examples of a crystalline oxide include Li_{0.35}La_{0.55}TiO₃, Li_{0.2}La_{0.27}NbO₃, and a perovskite-type crystal or a perovskite-like crystal in which elements constituting a crystal thereof are partially substituted with N, F, Al, Sr, Sc, Nb, Ta, Sb, a lanthanoid element, or the like, Li₇La₃Zr₂O₁₂, Li₅La₃Nb₂O₁₂, Li₅BaLa₂TaO₁₂, and a garnet-type crystal or a garnet-like crystal in which elements constituting a crystal thereof are partially substituted with N, F, Al, Sr, Sc, Nb, Ta, Sb, a lanthanoid element, or the like, Li_{1.3}Ti_{1.7}Al_{0.3}(PO₄)₃, Li_{1.4}Al_{0.4}Ti_{1.6}(PO₄)₃, Li_{1.4}Al_{0.4}Ti_{1.4}Ge_{0.2}(PO₄)₃, and a NASICON-type crystal in which elements constituting a crystal thereof are partially substituted with N, F, Al, Sr, Sc, Nb, Ta, Sb, a lanthanoid element, or the like, a LISICON-type crystal such as Li₁₄ZnGe₄O₁₆, and other crystalline materials such as Li_{3.4}V_{0.6}Si_{0.4}O₄, Li_{3.6}V_{0.4}Ge_{0.6}O₄, and Li₂₊ₓC₁₋ₓBₓO₃.

Examples of a crystalline sulfide include Li₁₀GeP₂Si₁₂, Li_{9.6}P₃S₁₂, Li_{9.54}Si_{1.74}P_{1.44}S_{11.7}Cl_{0.3}, and Li₃PS₄.

Examples of other amorphous materials include Li₂O-TiO₂, La₂O₃-Li₂O-TiO₂, LiNbO₃, LiSO₄, Li₄SiO₄, Li₃PO₄-Li₄SiO₄, Li₄GeO₄-Li₃VO₄, Li₄SiO₄-Li₃VO₄, Li₄GeO₄-Zn₂GeO₂, Li₄SiO₄-LiMoO₄, Li₄SiO₄-Li₄ZrO₄, SiO₂-P₂O₅-Li₂O, SiO₂-P₂O₅-LiCl, Li₂O-LiCl-B₂O₃, LiAlCl₄, LiAlF₄, LiF-Al₂O₃, LiBr-Al₂O₃, Li_{2.88}PO_{3.73}N_{0.14}, Li₃N-LiCl, Li₆NBr₃, Li₂S-SiS₂, and Li₂S-SiS₂-P₂S₅.

When the solid electrolyte layer 220 is constituted by a crystalline material, the crystalline material preferably has a crystalline structure such as a cubic crystal having small crystal plane anisotropy in the direction of lithium ion conduction. Further, when the solid electrolyte layer 220 is constituted by an amorphous material, the anisotropy in lithium ion conduction becomes small. Therefore, the crystalline material and the amorphous material as described above are both preferred as a solid electrolyte constituting the solid electrolyte layer 220.

The thickness of the solid electrolyte layer 220 is preferably 0.1 µm or more and 100 µm or less, and more preferably 0.2 µm or more and 10 µm or less. When the thickness of the solid electrolyte layer 220 is a value within the above range, the internal resistance of the solid electrolyte layer 220 can be further decreased, and also the occurrence of a short circuit between the positive electrode composite material 210 and the negative electrode 30 can be more effectively prevented.

For the purpose of improving the adhesion between the solid electrolyte layer 220 and the negative electrode 30, or improving the output or battery capacity of the lithium-ion secondary battery 100 by an increase in specific surface area, or the like, for example, a three-dimensional pattern structure such as a dimple, trench, or pillar pattern may be formed at the surface of the solid electrolyte layer 220 in contact with the negative electrode 30.

As a method for forming the solid electrolyte layer 220, for example, a vapor phase deposition method such as a vacuum vapor deposition method, a sputtering method, a CVD method, a PLD method, an ALD method, or an aerosol deposition method, a chemical deposition method using a solution such as a sol-gel method or an MOD method, or the like is exemplified. In this case, after forming a film, the crystal phase of the constituent material of the formed film may be changed by performing a heat treatment as needed.

In addition, for example, fine particles of an electrolyte or a precursor thereof are formed into a slurry together with an appropriate binder, followed by squeegeeing or screen printing, thereby forming a coating film, and then, the coating film may be baked onto the surface of the solid electrolyte layer 220 by drying and firing.

### [4-1-3] Negative Electrode

The negative electrode 30 may be any as long as it is constituted by a so-called negative electrode active material that repeats electrochemical occlusion and release of lithium ions at a lower potential than the positive electrode active material constituting the positive electrode composite material 210 that functions as the positive electrode.

Specific examples of the negative electrode active material constituting the negative electrode 30 include Nb₂O₅, V₂O₅, TiO₂, In₂O₃, ZnO, SnO₂, NiO, ITO, AZO, GZO, ATO, FTO, and lithium composite oxides such as Li₄Ti₅O₁₂ and Li₂Ti₃O₇. Further, additional examples thereof include metals and alloys such as Li, Al, Si, Si-Mn, Si-Co, Si-Ni, Sn, Zn, Sb, Bi, In, and Au, carbon materials, and materials obtained by intercalation of lithium ions between layers of a carbon material such as LiC₂₄ and LiC₆.

The negative electrode 30 is preferably formed as a thin film at one surface of the solid electrolyte layer 220 in consideration of an electric conduction property and an ion diffusion distance.

The thickness of the negative electrode 30 formed of the thin film is not particularly limited, but is preferably 0.1 µm or more and 500 µm or less, and more preferably 0.3 µm or more and 100 µm or less.

As a method for forming the negative electrode 30, for example, a vapor phase deposition method such as a vacuum vapor deposition method, a sputtering method, a CVD method, a PLD method, an ALD method, or an aerosol deposition method, a chemical deposition method using a solution such as a sol-gel method or an MOD method, or the like is exemplified. In addition, for example, fine particles of the negative electrode active material are formed into a slurry together with an appropriate binder, followed by squeegeeing or screen printing, thereby forming a coating film, and then, the coating film may be baked onto the surface of the solid electrolyte layer 220 by drying and firing.

### [4-1-4] Current Collector

The current collectors 41 and 42 are electrical conductors provided so as to play a role in transfer of electrons to the positive electrode composite material 210 and from the negative electrode 30, respectively. As the current collector, generally, a current collector constituted by a material that has a sufficiently small electrical resistance, and that does not substantially change the electric conduction property or the mechanical structure thereof by charging and discharging is used. Specifically, as the constituent material of the current collector 41 of the positive electrode composite material 210, for example, Al, Ti, Pt, Au, or the like is used. Further, as the constituent material of the current collector 42 of the negative electrode 30, for example, Cu or the like is favorably used.

The current collectors 41 and 42 are generally provided so that the contact resistance with the positive electrode composite material 210 and the negative electrode 30 becomes small, respectively. Examples of the shape of each of the current collectors 41 and 42 include a plate shape and a mesh shape.

The thickness of each of the current collectors 41 and 42 is not particularly limited, but is preferably 7 µm or more and 85 µm or less, and more preferably 10 µm or more and 60 µm or less.

In the configuration shown in the drawing, the lithium-ion secondary battery 100 includes a pair of current collectors 41 and 42, however, for example, when a plurality of lithium-ion secondary batteries 100 are used by being stacked and electrically coupled to one another in series, the lithium-ion secondary battery 100 may also be configured to include only the current collector 41 of the current collectors 41 and 42.

The lithium-ion secondary battery 100 may be used for any purpose. Examples of an electronic device to which the lithium-ion secondary battery 100 is applied as a power supply include a personal computer, a digital camera, a cellular phone, a smartphone, a music player, a tablet terminal, a timepiece, a smartwatch, various types of printers such as an inkjet printer, a television, a projector, a head-up display, wearable terminals such as wireless headphones, wireless earphones, smart glasses, and a head-mounted display, a video camera, a videotape recorder, a car navigation device, a drive recorder, a pager, an electronic notebook, an electronic dictionary, an electronic translation machine, an electronic calculator, an electronic gaming device, a toy, a word processor, a work station, a robot, a television telephone, a television monitor for crime prevention, electronic binoculars, a POS terminal, a medical device, a fish finder, various types of measurement devices, a device for a mobile terminal base station, various types of meters for a vehicle, a railroad car, an airplane, a helicopter, a ship, or the like, a flight simulator, and a network server. Further, the lithium-ion secondary battery 100 may be applied to, for example, moving objects such as a car and a ship. More specifically, it can be favorably applied as, for example, a storage battery for an electric car, a plug-in hybrid car, a hybrid car, a fuel cell car, or the like. In addition, it can also be applied to, for example, a power supply for household use, a power supply for industrial use, a storage battery for photovoltaic power generation, or the like.

### [4-2] Secondary Battery of Second Embodiment

Next, a lithium-ion secondary battery as a secondary battery according to a second embodiment will be described.

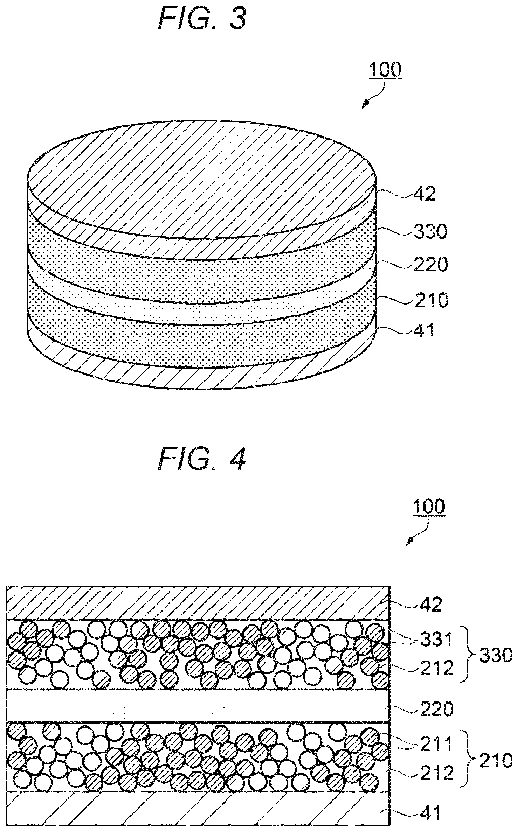

FIG. 3 is a schematic perspective view schematically showing a configuration of the lithium-ion secondary battery of the second embodiment, and FIG. 4 is a schematic cross-sectional view schematically showing a structure of the lithium-ion secondary battery of the second embodiment.

Hereinafter, the lithium-ion secondary battery according to the second embodiment will be described with reference to these drawings, but different points from the above-mentioned embodiment will be mainly described, and the description of the same matter will be omitted.

As shown in FIG. 3, a lithium-ion secondary battery 100 of this embodiment includes a positive electrode composite material 210 that functions as a positive electrode, and a solid electrolyte layer 220 and a negative electrode composite material 330 that functions as a negative electrode, which are sequentially stacked on the positive electrode composite material 210. The lithium-ion secondary battery 100 further includes a current collector 41 in contact with the positive electrode composite material 210 at an opposite face side of the positive electrode composite material 210 from a face thereof facing the solid electrolyte layer 220, and includes a current collector 42 in contact with the negative electrode composite material 330 at an opposite face side of the negative electrode composite material 330 from a face thereof facing the solid electrolyte layer 220.

Hereinafter, the negative electrode composite material 330 which is different from the configuration of the lithium-ion secondary battery 100 according to the above-mentioned embodiment will be described.

### [4-2-1] Negative Electrode Composite Material

As shown in FIG. 4, the negative electrode composite material 330 in the lithium-ion secondary battery 100 of this embodiment includes negative electrode active material particles 331 as active material particles, and a LiAl composite oxide 212 formed using the precursor solution according to the present disclosure. In such a negative electrode composite material 330, the battery reaction rate in the lithium-ion secondary battery 100 can be further increased by increasing an interfacial area where the negative electrode active material particles 331 and the LiAl composite oxide 212 are in contact with each other.

The negative electrode active material particles 331 preferably satisfy the conditions described in the above [1-4].

When the average particle diameter of the negative electrode active material particles 331 is a value within the above-mentioned range, it becomes easy to achieve both an actual capacity density close to the theoretical capacity of the negative electrode active material particles 331 and a high charge-discharge rate.

The particle size distribution of the negative electrode active material particles 331 is not particularly limited, and for example, in the particle size distribution having one peak, the half width of the peak can be set to 0.15 µm or more and 19 µm or less. Further, the particle size distribution of the negative electrode active material particles 331 may have two or more peaks.

In FIG. 4, the shape of the negative electrode active material particle 331 is shown as a spherical shape, however, the shape of the negative electrode active material particle 331 is not limited to a spherical shape, and it can have various shapes, for example, a columnar shape, a plate shape, a scaly shape, a hollow shape, an indefinite shape, and the like, and further, two or more types among these may be mixed.

When the content of the negative electrode active material particles 331 in the negative electrode composite material 330 is represented by XB [mass%] and the content of the LiAl composite oxide 212 in the negative electrode composite material 330 is represented by XS [mass%], it is preferred to satisfy a relationship: 0.0003 ≤ XS/XB ≤ 0.005, and it is more preferred to satisfy a relationship: 0.0004 ≤ XS/XB ≤ 0.003.

Further, the negative electrode composite material 330 may include a conductive aid, a binder, or the like other than the negative electrode active material particles 331 and the LiAl composite oxide 212.

As the conductive aid, any material may be used as long as it is an electrical conductor whose electrochemical interaction can be ignored at a positive electrode reaction potential, and more specifically, for example, a carbon material such as acetylene black, Ketjen black, or a carbon nanotube, a noble metal such as palladium or platinum, an electrically conductive oxide such as SnO₂, ZnO, RuO₂, ReO₃, or Ir₂O₃, or the like can be used.

The thickness of the negative electrode composite material 330 is not particularly limited, but is preferably 0.1 µm or more and 500 µm or less, and more preferably 0.3 µm or more and 100 µm or less.

### [4-3] Secondary Battery of Third Embodiment

Hereinafter, a lithium-ion secondary battery as a secondary battery according to a third embodiment will be described.

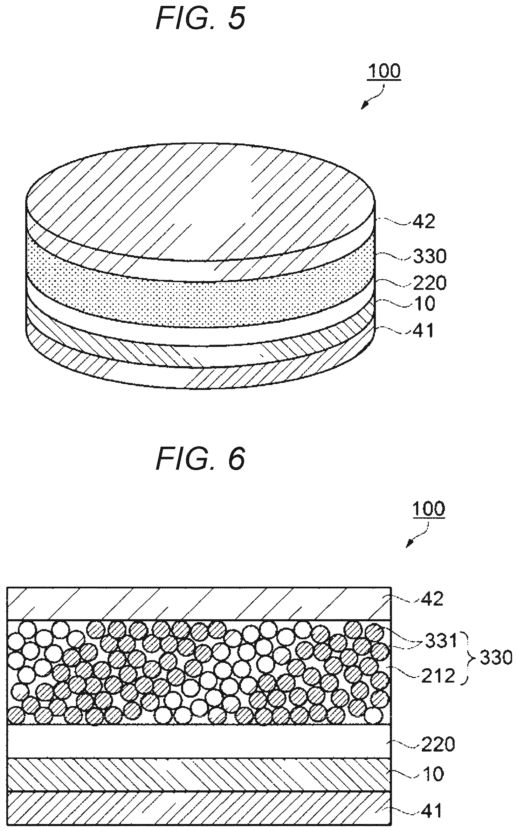

FIG. 5 is a schematic perspective view schematically showing a configuration of the lithium-ion secondary battery of the third embodiment, and FIG. 6 is a schematic cross-sectional view schematically showing a structure of the lithium-ion secondary battery of the third embodiment.

Hereinafter, the lithium-ion secondary battery according to the third embodiment will be described with reference to these drawings, but different points from the above-mentioned embodiments will be mainly described, and the description of the same matter will be omitted.

As shown in FIG. 5, a lithium-ion secondary battery 100 of this embodiment includes a positive electrode 10, and a solid electrolyte layer 220 and a negative electrode composite material 330, which are sequentially stacked on the positive electrode 10. The lithium-ion secondary battery 100 further includes a current collector 41 in contact with the positive electrode 10 at an opposite face side of the positive electrode 10 from a face thereof facing the solid electrolyte layer 220, and includes a current collector 42 in contact with the negative electrode composite material 330 at an opposite face side of the negative electrode composite material 330 from a face thereof facing the solid electrolyte layer 220.

Hereinafter, the positive electrode 10 which is different from the configuration of the lithium-ion secondary battery 100 according to the above-mentioned embodiments will be described.

### [4-3-1] Positive Electrode

The positive electrode 10 may be any as long as it is constituted by a positive electrode active material that can repeat electrochemical occlusion and release of lithium ions.

Specifically, as the positive electrode active material constituting the positive electrode 10, for example, a lithium composite oxide which contains at least Li and is constituted by any one or more types of elements selected from the group consisting of V, Cr, Mn, Fe, Co, Ni, and Cu, or the like can be used. Examples of such a composite oxide include LiCoO₂, LiNiO₂, LiMn₂O₄, Li₂Mn₂O₃, LiCr_{0.5}Mn_{0.5}O₂, LiFePO₄, Li₂FeP₂O₇, LiMnPO₄, LiFeBO₃, Li₃V₂(PO₄)₃, Li₂CuO₂, Li₂FeSiO₄, and Li₂MnSiO₄. Further, as the positive electrode active material constituting the positive electrode 10, for example, a fluoride such as LiFeF₃, a boride complex compound such as LiBH₄ or Li₄BN₃H₁₀, an iodine complex compound such as a polyvinylpyridine-iodine complex, a nonmetallic compound such as sulfur, or the like can also be used.

The positive electrode 10 is preferably formed as a thin film at one surface of the solid electrolyte layer 220 in consideration of an electric conduction property and an ion diffusion distance.

The thickness of the positive electrode 10 formed of the thin film is not particularly limited, but is preferably 0.1 µm or more and 500 µm or less, and more preferably 0.3 µm or more and 100 µm or less.

As a method for forming the positive electrode 10, for example, a vapor phase deposition method such as a vacuum vapor deposition method, a sputtering method, a CVD method, a PLD method, an ALD method, or an aerosol deposition method, a chemical deposition method using a solution such as a sol-gel method or an MOD method, or the like is exemplified. In addition, for example, fine particles of the positive electrode active material are formed into a slurry together with an appropriate binder, followed by squeegeeing or screen printing, thereby forming a coating film, and then, the coating film may be baked onto the surface of the solid electrolyte layer 220 by drying and firing.

In the first, second, and third embodiments, another layer may be provided between layers or at a surface of a layer of the respective layers constituting the lithium-ion secondary battery 100. Examples of such a layer include an adhesive layer, an insulating layer, and a protective layer.

Hereinabove, preferred embodiments of the present disclosure have been described, however, the present disclosure is not limited thereto.

For example, the precursor powder according to the present disclosure is not limited to those produced by the above-mentioned method.

Further, when the present disclosure is applied to the lithium-ion secondary battery, the configuration of the lithium-ion secondary battery is not limited to those of the above-mentioned embodiments.

Further, the method for producing an electrode according to the present disclosure may further include another step in addition to the above-mentioned steps.

### Examples

Next, specific Examples of the present disclosure will be described.

### [5] Preparation of Precursor Solution

### [5-1] Preparation of Raw Material Solutions for Preparing Precursor Solution

First, raw material solutions to be used for preparing precursor solutions of respective Examples were prepared.

### [5-1-1] Preparation of 2-n-Butoxyethanol Solution of Lithium Nitrate

In a 30-g reagent bottle made of Pyrex (Pyrex: trademark of Corning Incorporated) equipped with a magnetic stirring bar, 1.3789 g of lithium nitrate with a purity of 99.95%, 3N5, manufactured by Kanto Chemical Co., Inc. and 18.6211 g of 2-n-butoxyethanol (ethylene glycol monobutyl ether) Cica Special Grade, manufactured by Kanto Chemical Co., Inc. were weighed.

Subsequently, the reagent bottle was placed on a hot plate with a magnetic stirrer function, and lithium nitrate was completely dissolved in 2-n-butoxyethanol while stirring at 170°C for 1 hour. The resulting solution was gradually cooled to 25°C, whereby a 2-n-butoxyethanol solution of 1 mol/kg lithium nitrate that is a lithium oxoacid salt was obtained.

The purity of lithium nitrate was measured using an ion chromatograph mass spectrometer.

### [5-1-2] Preparation of 2-n-Butoxyethanol Solution of Aluminum Nitrate

In a 30-g reagent bottle made of Pyrex equipped with a magnetic stirring bar, 7.5030 g of aluminum nitrate nonahydrate manufactured by Kanto Chemical Co., Inc. and 12.4970 g of 2-n-butoxyethanol Cica Special Grade, manufactured by Kanto Chemical Co., Inc. were weighed.

Subsequently, the reagent bottle was placed on a magnetic stirrer, and aluminum nitrate nonahydrate was completely dissolved in 2-n-butoxyethanol while stirring at room temperature for 30 minutes, whereby a 2-n-butoxyethanol solution of 1 mol/kg aluminum nitrate that is an aluminum compound was obtained.

### [5-1-3] Preparation of 2-n-Butoxyethanol Solution of Aluminum Tri-Sec-Butoxide

In a 30-g reagent bottle made of Pyrex equipped with a magnetic stirring bar, 4.9266 g of aluminum tri-sec-butoxide manufactured by Kojundo Chemical Lab. Co., Ltd. and 15.0734 g of 2-n-butoxyethanol Cica Special Grade, manufactured by Kanto Chemical Co., Inc. were weighed.

Subsequently, the reagent bottle was placed on a magnetic stirrer, and aluminum tri-sec-butoxide was completely dissolved in 2-n-butoxyethanol while stirring at room temperature for 30 minutes, whereby a 2-n-butoxyethanol solution of 1 mol/kg aluminum tri-sec-butoxide that is an aluminum compound was obtained.

### [5-2] Preparation of Precursor Solution

### Example A1

A precursor solution in which the content of aluminum and the content of lithium are equivalent in molar ratio was prepared as follows.

First, in a reagent bottle made of Pyrex, 15.000 g of the 2-n-butoxyethanol solution of 1 mol/kg lithium nitrate prepared in the above [5-1-1] and 5 mL of 2-n-butoxyethanol as an organic solvent were weighed, and a magnetic stirring bar was placed therein, and then, the reagent bottle was placed on a hot plate with a magnetic stirrer function.

Subsequently, heating and stirring were performed for 30 minutes by setting the set temperature of the hot plate to 160°C and the rotation speed to 500 rpm, and 5 mL of 2-n-butoxyethanol was further added thereto, and heating and stirring were performed again for 30 minutes. Thereafter, 5 mL of 2-n-butoxyethanol was added thereto, and heating and stirring were performed again for 30 minutes. When 30 minute-heating and stirring is regarded as a one-time dehydration treatment, the dehydration treatment is regarded as being performed three times.

After the dehydration treatment as described above, the reagent bottle was covered with a lid and sealed.

Subsequently, stirring was performed by setting the set temperature of the hot plate to 25°C which is the same as room temperature and the rotation speed to 500 rpm, thereby gradually cooling the reagent bottle to room temperature.

Subsequently, the reagent bottle was transferred to a dry atmosphere, and in the reagent bottle, 15.000 g of the 2-n-butoxyethanol solution of 1 mol/kg aluminum tri-sec-butoxide prepared in the above [5-1-3] was weighed, and a magnetic stirring bar was placed therein. Subsequently, stirring was performed at room temperature for 30 minutes by setting the rotation speed of a magnetic stirrer to 500 rpm, whereby a precursor solution was obtained.

### Example A2

A precursor solution was prepared in the same manner as in the above Example A1 except that the used amount of the 2-n-butoxyethanol solution of 1 mol/kg lithium nitrate prepared in the above [5-1-1] was changed to 16.500 g.

That is, in the precursor solution of this Example, the content of lithium is 1.10 times the content of aluminum in terms of amount of substance.

### Example A3

A precursor solution was prepared in the same manner as in the above Example A1 except that the used amount of the 2-n-butoxyethanol solution of 1 mol/kg lithium nitrate prepared in the above [5-1-1] was changed to 18.000 g.

That is, in the precursor solution of this Example, the content of lithium is 1.20 times the content of aluminum in terms of amount of substance.

### Example A4

A precursor solution was prepared in the same manner as in the above Example A1 except that 7.500 g of the aluminum nitrate solution prepared in the above [5-1-2] and 7.500 g of the aluminum tri-sec-butoxide solution prepared in the above [5-1-3] were used instead of using 15.000 g of the aluminum tri-sec-butoxide solution prepared in the above [5-1-3].

That is, in the precursor solution of this Example, the content of lithium is 1.00 times the content of aluminum in terms of amount of substance.

### Example A5

A precursor solution was prepared in the same manner as in the above Example A4 except that the used amount of the lithium nitrate solution prepared in the above [5-1-1] was changed to 16.500 g, the used amount of the aluminum nitrate solution prepared in the above [5-1-2] was changed to 11.250 g, and the used amount of the aluminum tri-sec-butoxide solution prepared in the above [5-1-3] was changed to 3.750 g.

That is, in the precursor solution of this Example, the content of lithium is 1.10 times the content of aluminum in terms of amount of substance.

### Example A6

A precursor solution was prepared in the same manner as in the above Example A4 except that the used amount of the lithium nitrate solution prepared in the above [5-1-1] was changed to 18.000 g, the used amount of the aluminum nitrate solution prepared in the above [5-1-2] was changed to 9.000 g, and the used amount of the aluminum tri-sec-butoxide solution prepared in the above [5-1-3] was changed to 6.000 g.

That is, in the precursor solution of this Example, the content of lithium is 1.20 times the content of aluminum in terms of amount of substance.

### [6] Production and Evaluation of Pellet

### Example B1

In a beaker made of titanium having an inner diameter of 92 mm and a height of 90 mm, the precursor solution of the above Example A1 was placed, and the beaker was placed on a hot plate and heated for 1 hour by setting the set temperature of the hot plate to 160°C, and then heated for 30 minutes by setting the set temperature of the hot plate to 180°C, thereby removing the solvent.

Subsequently, the beaker was heated for 30 minutes by setting the set temperature of the hot plate to 360°C, thereby decomposing most of the contained organic component by combustion.

Thereafter, the beaker was heated for 1 hour by setting the set temperature of the hot plate to 540°C, thereby burning and decomposing the remaining organic component. Then, the beaker was gradually cooled to room temperature on the hot plate, whereby a calcined body was obtained.

Subsequently, the calcined body was transferred to an agate mortar and ground, whereby a precursor powder was obtained. The precursor powder that is a powder of the calcined body was dispersed in water, and measurement was performed using a particle size distribution measuring device, MicroTrac MT3300EXII manufactured by Nikkiso Co., Ltd., whereby a median diameter D50 was obtained. D50 was 350 nm.

Subsequently, 0.150 g of the precursor powder was weighed and placed in a pellet die with an exhaust port having an inner diameter of 10 mm as a molding die, pressurized at a pressure of 624 MPa for 5 minutes, whereby a calcined body pellet that is a disk-shaped molded material was produced.

Then, the calcined body pellet was placed in a crucible made of magnesium oxide, the crucible was covered with a lid made of magnesium oxide, and then, the pellet was subjected to main firing in an electric muffle furnace FP311 manufactured by Yamato Scientific Co., Ltd. The main firing conditions were set to 700°C and 8 hours. Subsequently, the electric muffle furnace was gradually cooled to room temperature, and then, a pellet for evaluation having a diameter of about 10.0 mm and a thickness of about 1,000 µm was taken out from the crucible.

### Examples B2 to B6

Pellets for evaluation were produced in the same manner as in the above Example B1 except that the precursor solutions of the above Examples A2 to A6, respectively, were used in place of the precursor solution of the above Example A1.

D50 of the precursor powder in Example B2 was 360 nm, D50 of the precursor powder in Example B3 was 356 nm, D50 of the precursor powder in Example B4 was 348 nm, D50 of the precursor powder in Example B5 was 356 nm, and D50 of the precursor powder in Example B6 was 357 nm.

### Comparative Example B1

In 200 g of an aqueous solution of lithium hydroxide in which the pH was adjusted to 10 and the temperature to 70°C, 2.000 g of Al(NO₃)₃·9H₂O and aqueous ammonia for suppressing a variation in pH were added dropwise over 5 hours, whereby an Al(OH)₃ coprecipitate was produced. Thereafter, the Al(OH)₃ coprecipitate was taken out from the reaction solution, washed, and then dried, and thereafter, a heat treatment was performed for 10 hours at a temperature of 400°C in an air atmosphere. Thereafter, a pellet for evaluation was produced in the same manner as in the above Example B1.

D50 of the precursor powder in Comparative Example B1 was 5 µm.

With respect to the above Examples B1 to B6 and Comparative Example B1, the lithium compound and the aluminum compound which are raw materials of the precursor solution used for producing the pellet for evaluation, and the results of D50 of the precursor powder, the crystalline structure of the constituent material of the pellet for evaluation, the presence or absence of contaminants, and the bulk density are collectively shown in Table 1.

D50 of the precursor powder was determined by measurement using a particle size distribution measuring device, MicroTrac MT3300EXII manufactured by Nikkiso Co., Ltd. The crystalline structure of the constituent material of the pellet for evaluation was determined from an X-ray diffraction pattern obtained by an analysis using an X-ray diffractometer X'Pert-PRO manufactured by Koninklijke Philips N.V. Further, the bulk density of the pellet for evaluation was obtained by determining the volume of the pellet for evaluation from the measurement result of the diameter using Digimatic Caliper CD-15APX manufactured by Mitutoyo Corporation, and the measurement result of the thickness using µ-Mate that is a digital micrometer manufactured by Sony Corporation, and performing calculation based on the relationship between the determined volume and the specific gravity 2.62 of LiAlO₂.

**Table 1**

| | Lithium compound | | Aluminum compound | D50 of precursor powder | Crystalline structure by XRD measurement | Presence or absence of contaminants | Bulk density |
|---|---|---|---|---|---|---|---|
| | Type | Ratio of amount of substance to content of aluminum | | | | | |
| Example B1 | lithium nitrate | 1.00 | aluminum tri-sec-butoxide | 350 nm | α phase | absent | 94% |
| Example B2 | lithium nitrate | 1.10 | aluminum tri-sec-butoxide | 360 nm | α phase | absent | 92% |
| Example B3 | lithium nitrate | 1.20 | aluminum tri-sec-butoxide | 356 nm | α phase | absent | 90% |
| Example B4 | lithium nitrate | 1.00 | aluminum nitrate nonahydrate | 348 nm | α phase | absent | 95% |
| Example B5 | lithium nitrate | 1.10 | aluminum nitrate nonahydrate | 356 nm | α phase | absent | 93% |
| Example B6 | lithium nitrate | 1.20 | aluminum nitrate nonahydrate | 357 nm | α phase | absent | 90% |
| Comparative Example B1 | lithium nitrate | non | aluminum nitrate nonahydrate | 5 µm | γ-Al₂O₃ | present | 90% |

Further, when the total lithium ion conductivity was measured for the pellets for evaluation of the above Examples B1 to B6 and Comparative Example B1, all showed an insulator behavior.

The measurement of the total lithium ion conductivity was performed as follows. That is, with respect to each of the pellets for evaluation, a metal lithium foil having a diameter of 5 mm was pressed against both faces to form activated electrodes, and the total lithium ion conductivity was determined by measuring an electrochemical impedance (EIS) using an AC impedance analyzer Solartron 1260 (manufactured by Solartron Analytical, Inc.). The EIS measurement was performed at an alternating current (AC) amplitude of 10 mV in a frequency range from 10⁷ Hz to 10⁻¹ Hz. The total lithium ion conductivity obtained by the EIS measurement includes the bulk lithium ion conductivity and the grain boundary lithium ion conductivity in the pellet.

### [7] Production of Powder for Positive Electrode (1)

### Example C1

The precursor solution prepared in the above Example A1 and LiCoO₂ particles as positive electrode active material particles for a lithium-ion secondary battery were mixed at a predetermined ratio, and then, subjected to ultrasonic dispersion for 2 hours at 55°C under the conditions of an oscillation frequency of 38 kHz and an output of 80 W using an ultrasonic cleaner with a temperature adjusting function, US-1 manufactured by AS ONE Corporation.

Thereafter, the resultant was centrifuged at 10,000 rpm for 3 minutes using a centrifuge, and the supernatant was removed.

The obtained precipitate was transferred to a crucible made of magnesium oxide, the crucible was covered with a lid, and by using an atmosphere controlled furnace, while supplying dry air at a flow rate of 1 L/min, the precipitate was fired at 360°C for 30 minutes, and thereafter fired at 540°C for 1 hour, and further fired at 900°C for 3 hours, and then, cooled to room temperature. By doing this, an α-phase lithium aluminate-coated positive electrode active material powder containing many constituent particles in which the LiCoO₂ particles that are base particles were each coated with a coating layer constituted by an α-phase lithium aluminate compound represented by LiAlO₂ was obtained.

### Examples C2 and C3

α-Phase lithium aluminate-coated positive electrode active material powders were produced in the same manner as in the above Example C1 except that the thickness of the coating layer was changed by adjusting the mixing ratio of the precursor solution and the LiCoO₂ particles.

### Example C4

An α-phase lithium aluminate-coated positive electrode active material powder was produced in the same manner as in the above Example C1 except that LiNi_{0.5}Co_{0.2}Mn_{0.3}O₂ particles were used in place of the LiCoO₂ particles as the positive electrode active material particles for a lithium-ion secondary battery.

### Comparative Example C1

In this Comparative Example, an aggregate of LiCoO₂ particles was directly used as a positive electrode active material powder without forming a coating layer for the LiCoO₂ particles as the positive electrode active material particles for a lithium-ion secondary battery. In other words, a positive electrode active material powder that is not coated with an α-phase lithium aluminate was prepared in place of an α-phase lithium aluminate-coated positive electrode active material powder.

### Comparative Example C2

In 200 g of an aqueous solution of lithium hydroxide in which the pH was adjusted to 10 and the temperature to 70°C, 10 g of lithium cobalt oxide was charged, and dispersed by stirring, and thereafter 0.0154 g of Al(NO₃)₃·9H₂O and aqueous ammonia for suppressing a variation in pH were added dropwise thereto over 5 hours, whereby an Al(OH)₃ coprecipitate was produced and adhered to the surface of the lithium cobalt oxide. Thereafter, the lithium cobalt oxide to which the Al(OH)₃ coprecipitate was adhered was taken out from the reaction solution, washed, and then dried, and thereafter, a heat treatment was performed for 10 hours at a temperature of 400°C in an air atmosphere so as to form a coating film of an Al-containing oxide at the surface of the lithium cobalt oxide, whereby a positive electrode material was obtained.

### Comparative Example C3

In this Comparative Example, an aggregate of LiNi_{0.5}Co_{0.2}Mn_{0.3}O₂ particles was directly used as a positive electrode active material powder without forming a coating layer for the LiNi_{0.5}Co_{0.2}Mn_{0.3}O₂ particles as the positive electrode active material particles for a lithium-ion secondary battery. In other words, in this Comparative Example, a positive electrode active material powder that is not coated with an α-phase lithium aluminate was prepared in place of an α-phase lithium aluminate-coated positive electrode active material powder.

In all the α-phase lithium aluminate-coated positive electrode active material powders according to Examples C1 to C4, the positive electrode active material powders according to Comparative Examples C1 and C3, and the γ-phase Al₂O₃-coated positive electrode active material powder according to Comparative Example C2 obtained as described above, the content of the solvent was 0.1 mass% or less, and the content of oxoanions was 100 ppm or less. Further, when reflection electron images were obtained by measurement using a field-emission scanning electron microscope with EDS (manufactured by JEOL Ltd.), none was observed at the surface of the positive electrode active material powder in which a coating layer was not formed.

In the constituent particles of the α-phase lithium aluminate-coated positive electrode active material powder or the γ-phase Al₂O₃-coated positive electrode active material powder, in which the coating layer of α-phase lithium aluminate or the coating layer of γ-phase Al₂O₃ was formed at the surfaces of the LiCoO₂ particles, a black contrast was observed at the surfaces. As the concentration increased, the black contrast increased. This is considered to be α-phase lithium aluminate (α-LiAlO₂) or γ-phase Al₂O₃ generated from the precursor. From an X-ray diffractometer, only a diffraction line attributed to LiCoO₂ was confirmed in each case, and therefore, the film thickness of the coating layer is considered to be thin to such an extent that the diffraction intensity derived from α-phase lithium aluminate or γ-phase Al₂O₃ is below the lower detection limit. According to the above-mentioned field-emission scanning electron microscope with EDS (manufactured by JEOL Ltd.), the coating layer was thin, and Al and O were detected at the surfaces of the LiCoO₂ particles. Based on the compositional ratio of α-phase lithium aluminate, the compositional ratio of Al to O is 1.00:2.00, and the element percentage ratio of Al to O detected by this measurement was 0.96:1.95, and further, based on the compositional ratio of γ-phase Al₂O₃, the compositional ratio of Al to O is 2.00:3.00, and the element percentage ratio of Al to O detected by this measurement was 1.96:2.98, and therefore, the compositional ratios substantially coincide with each other, so that α-phase lithium aluminate and γ-phase Al₂O₃ are considered to be generated. Further, with respect to the coating layers during the production process of the α-phase lithium aluminate-coated positive electrode active material powders of the above Examples C1 to C4, that is, the coating layers after the firing treatment at 360°C for 30 minutes and the firing treatment at 540°C for 1 hour and before the firing treatment at 900°C, when measurement was performed at a temperature raising rate of 10°C/min using TG-DTA, only one exothermic peak was observed in a range of 300°C or higher and 1,000°C or lower in each case. From the results, it can be said that in the above Examples C1 to C4, the coating layer at the stage of the above-mentioned production process, that is, the coating layer constituted by a precursor of a LiAl composite oxide is formed from a substantially single crystal phase. In the above Examples C1 to C4, the coating layer of the constituent particles of the finally obtained α-phase lithium aluminate-coated positive electrode active material powder was constituted by α-phase lithium aluminate that is a LiAl composite oxide. Further, in the above Examples C1 to C4, the content of the liquid component contained in the composition at the stage of the above-mentioned production process was 0.1 mass% or less in each case. In addition, in the above Examples C1 to C4, the crystal grain diameter of the oxide contained in the coating layer at the stage of the above-mentioned production process was 20 nm or more and 160 nm or less in each case.

The configurations of the α-phase lithium aluminate-coated positive electrode active material powders according to the above Examples C1 to C4, the positive electrode active material powders according to Comparative Examples C1 and C3, and the γ-phase Al₂O₃-coated positive electrode active material powder according to Comparative Example C2 are collectively shown in Table 2.

**Table 2**

| | Base particles | | Coating layer | | | T/D |
|---|---|---|---|---|---|---|
| | Composition | Average particle diameter D [µm] | Composition | Crystal phase | Thickness T [nm] | |
| Example C1 | LiCoO₂ | 7 | LiAlO₂ | α phase | 5.2 | 0.0007 |
| Example C2 | LiCoO₂ | 7 | LiAlO₂ | α phase | 24 | 0.0034 |
| Example C3 | LiCoO₂ | 7 | LiAlO₂ | α phase | 35.3 | 0.005 |
| Example C4 | LiNi_{0.5}Co_{0.2}Mn_{0.3}O₂ | 7 | LiAlO₂ | α phase | 28.9 | 0.0041 |
| Comparative Example C1 | LiCoO₂ | 7 | - | - | - | - |
| Comparative Example C2 | LiCoO₂ | 7 | Al₂O₃ | γ phase | 5 | 0.0007 |
| Comparative Example C3 | LiNi_{0.5}Co_{0.2}Mn_{0.3}O₂ | 7 | - | - | - | - |

### [8] Evaluation of Powder for Positive Electrode (1)

By using each of the α-phase lithium aluminate-coated positive electrode active material powders according to Examples C1 to C4 obtained as described above and the γ-phase Al₂O₃-coated positive electrode active material powder according to Comparative Example C2 obtained as described above, electrical measurement cells were produced as follows. Further, in the following description, a case where the α-phase lithium aluminate-coated positive electrode active material powder or the γ-phase Al₂O₃-coated positive electrode active material powder was used will be described, however, also with respect to Comparative Examples C1 and C3, electrical measurement cells were produced in the same manner except that the positive electrode active material powder was used in place of the α-phase lithium aluminate-coated positive electrode active material powder or the γ-phase Al₂O₃-coated positive electrode active material powder.

First, the α-phase lithium aluminate-coated positive electrode active material powder or the γ-phase Al₂O₃-coated positive electrode active material powder was powder mixed with acetylene black (DENKA BLACK, manufactured by Denka Company Limited) that is a conductive aid, and then, further a n-methylpyrrolidinone solution of 10 mass% polyvinylidene fluoride (manufactured by Sigma-Aldrich Japan) was added thereto, whereby a slurry was obtained. The content ratio of the α-phase lithium aluminate-coated positive electrode active material powder or the γ-phase Al₂O₃-coated positive electrode active material powder, acetylene black, and polyvinylidene fluoride in the obtained slurry was 90:5:5 in mass ratio.

Subsequently, the slurry was applied onto an aluminum foil and dried under vacuum, whereby a positive electrode was formed.

The formed positive electrode was punched into a disk shape with a diameter of 13 mm, and Celgard #2400 (manufactured by Asahi Kasei Corporation) as a separator was overlapped therewith. Then, an organic electrolyte solution containing LiPF₆ as a solute, and also containing ethylene carbonate and diethylene carbonate as nonaqueous solvents was injected, and as a negative electrode, a lithium metal foil manufactured by Honjo Metal Co., Ltd. was enclosed in a CR2032 coin cell, whereby an electrical measurement cell was obtained. As the organic electrolyte solution, LBG-96533 manufactured by Kishida Chemical Co., Ltd. was used.

Thereafter, the obtained electrical measurement cell was coupled to a battery charge-discharge evaluation system HJ1001SD8 manufactured by Hokuto Denko Corporation, and as CCCV charge and CC discharge, 0.2C: 8 cycles, 0.5C: 5 cycles, 1C: 5 cycles, 2C: 5 cycles, 3C: 5 cycles, 5C: 5 cycles, 8C: 5 cycles, 10C: 5 cycles, 16C: 5 cycles, and 0.2C: 5 cycles were performed. After cycles were repeated at the same C-rate, the charge-discharge characteristics were evaluated by a method of increasing the C-rate. The charge-discharge current at this time was set by calculation using 137 mAh/g as the actual capacity of LiCoO₂ and 160 mAh/g as the actual capacity of NCM523 based on the mass of the positive electrode active material of each cell.

The discharge capacity at 16C discharge in the fifth cycle is collectively shown in Table 3. It can be said that as this numerical value is larger, the charge-discharge performance at a high load is superior.

**Table 3**

| | Discharge capacity at 16C discharge in 5^{th} cycle [mAh] |
|---|---|
| Example C1 | 110 |
| Example C2 | 110 |
| Example C3 | 102 |
| Example C4 | 49 |
| Comparative Example C1 | 50 |
| Comparative Example C2 | 75 (However, capacity decreased at low load side) |
| Comparative Example C3 | 21 |

As apparent from Table 3, according to the present disclosure, excellent results were obtained. On the other hand, in Comparative Examples, satisfactory results could not be obtained. More specifically, in comparison of Examples C1 to C3 with Comparative Examples C1 and C2, in which LiCoO₂ particles were used as the positive electrode active material particles for a lithium-ion secondary battery, apparently excellent results were obtained in Examples C1 to C3 as compared with Comparative Examples C1 and C2. In comparison of Example C4 with Comparative Example C3, in which LiNi_{0.5}Co_{0.2}Mn_{0.3}O₂ particles were used as the positive electrode active material particles for a lithium-ion secondary battery, an apparently excellent result was obtained in Example C4 as compared with Comparative Example C3.

Further, α-phase lithium aluminate-coated positive electrode active material powders were produced in the same manner as in the above Examples C1 to C4 except that each of the precursor solutions of the above Examples A2 to A6 was used in place of the precursor solution of the above Example A1, and evaluation was performed in the same manner as in the above [8] with respect to the α-phase lithium aluminate-coated positive electrode active material powders, similar results to those of the above Examples C1 to C4 were obtained.

### [9] Production of Powder for Positive Electrode (2)

### Example D1

A precursor powder obtained in the same manner as described in the above Example B1 and LiCoO₂ particles as positive electrode active material particles for a lithium-ion secondary battery were prepared, and these were mixed at a predetermined ratio, and then placed in an agate mortar. Then, hexane was added thereto until the materials were wet, and the resultant was stirred well using an agate pestle until hexane was volatilized and disappeared. This procedure was repeated three times.

The obtained mixture was transferred to a crucible made of magnesium oxide, the crucible was covered with a lid, and by using an atmosphere controlled furnace, while supplying dry air at a flow rate of 1 L/min, the mixture was fired at 360°C for 30 minutes, and thereafter fired at 540°C for 1 hour, and further fired at 900°C for 3 hours, and then, cooled to room temperature. By doing this, an α-phase lithium aluminate-coated positive electrode active material powder containing many constituent particles in which LiCoO₂ particles that are base particles were each coated with a coating layer constituted by an α-phase lithium aluminate compound represented by LiAlO₂ was obtained.

### Examples D2 and D3

α-Phase lithium aluminate-coated positive electrode active material powders were produced in the same manner as in the above Example D1 except that the thickness of the coating layer was changed by adjusting the mixing ratio of the precursor powder and the LiCoO₂ particles.

### Example D4

An α-phase lithium aluminate-coated positive electrode active material powder was produced in the same manner as in the above Example D1 except that LiNi_{0.5}Co_{0.2}Mn_{0.3}O₂ particles were used in place of the LiCoO₂ particles as the positive electrode active material particles for a lithium-ion secondary battery.

### Comparative Example D1

In this Comparative Example, an aggregate of LiCoO₂ particles was directly used as a positive electrode active material powder without forming a coating layer for the LiCoO₂ particles as the positive electrode active material particles for a lithium-ion secondary battery. In other words, a positive electrode active material powder that is not coated with an α-phase lithium aluminate was prepared in place of an α-phase lithium aluminate-coated positive electrode active material powder.

### Comparative Example D2

A γ-phase Al₂O₃-coated positive electrode active material powder was produced in the same manner as in the above Example D1 except that an Al(OH)₃ coprecipitate powder obtained in the same manner as described in the above Comparative Example B1 was used in place of a precursor powder obtained in the same manner as described in the above Example B1. Comparative Example D3

In this Comparative Example, an aggregate of LiNi_{0.5}Co_{0.2}Mn_{0.3}O₂ particles was directly used as a positive electrode active material powder without forming a coating layer for the LiNi_{0.5}Co_{0.2}Mn_{0.3}O₂ particles as the positive electrode active material particles for a lithium-ion secondary battery. In other words, in this Comparative Example, a positive electrode active material powder that is not coated with an α-phase lithium aluminate was prepared in place of an α-phase lithium aluminate-coated positive electrode active material powder.

In all the α-phase lithium aluminate-coated positive electrode active material powders according to Examples D1 to D4, the positive electrode active material powders according to Comparative Examples D1 and D3, and the γ-phase Al₂O₃-coated positive electrode active material powder according to Comparative Example D2 obtained as described above, the content of the solvent was 0.1 mass% or less, and the content of oxoanions was 100 ppm or less. Further, when reflection electron images were obtained by measurement using a field-emission scanning electron microscope with EDS (manufactured by JEOL Ltd.), none was observed at the surface of the positive electrode active material powder in which a coating layer was not formed.

In the constituent particles of the α-phase lithium aluminate-coated positive electrode active material powder or the γ-phase Al₂O₃-coated positive electrode active material powder, in which the coating layer of α-phase lithium aluminate or the coating layer of γ-phase Al₂O₃ was formed at the surfaces of the LiCoO₂ particles, a black contrast was observed at the surfaces. As the concentration increased, the black contrast increased. This is considered to be α-phase lithium aluminate (α-LiAlO₂) or γ-phase Al₂O₃ generated from the precursor. From an X-ray diffractometer, only a diffraction line attributed to LiCoO₂ was confirmed in each case, and therefore, the film thickness of the coating layer is considered to be thin to such an extent that the diffraction intensity derived from α-phase lithium aluminate or γ-phase Al₂O₃ is below the lower detection limit. According to the above-mentioned field-emission scanning electron microscope with EDS (manufactured by JEOL Ltd.), the coating layer was thin, and Al and O were detected at the surfaces of the LiCoO₂ particles. Based on the compositional ratio of α-phase lithium aluminate, the compositional ratio of Al to O is 1.00:2.00, and the element percentage ratio of Al to O detected by this measurement was 0.96:1.95, and further, based on the compositional ratio of γ-phase Al₂O₃, the compositional ratio of Al to O is 2.00:3.00, and the element percentage ratio of Al to O detected by this measurement was 1.96:2.98, and therefore, the compositional ratios substantially coincide with each other, so that α-phase lithium aluminate and γ-phase Al₂O₃ are considered to be generated. Further, with respect to the coating layers during the production process of the α-phase lithium aluminate-coated positive electrode active material powders of the above Examples D1 to D4, that is, the coating layers after the firing treatment at 360°C for 30 minutes and the firing treatment at 540°C for 1 hour and before the firing treatment at 900°C, when measurement was performed at a temperature raising rate of 10°C/min using TG-DTA, only one exothermic peak was observed in a range of 300°C or higher and 1,000°C or lower in each case. From the results, it can be said that in the above Examples D1 to D4, the coating layer at the stage of the above-mentioned production process, that is, the coating layer constituted by a precursor of a LiAl composite oxide is formed from a substantially single crystal phase. In the above Examples D1 to D4, the coating layer of the constituent particles of the finally obtained α-phase lithium aluminate-coated positive electrode active material powder was constituted by α-phase lithium aluminate that is a LiAl composite oxide. Further, in the above Examples D1 to D4, the content of the liquid component contained in the composition at the stage of the above-mentioned production process was 0.1 mass% or less in each case. In addition, in the above Examples D1 to D4, the crystal grain diameter of the oxide contained in the coating layer at the stage of the above-mentioned production process was 20 nm or more and 160 nm or less in each case.

The configurations of the α-phase lithium aluminate-coated positive electrode active material powders according to the above Examples D1 to D4, the positive electrode active material powders according to Comparative Examples D1 and D3, and the γ-phase Al₂O₃-coated positive electrode active material powder according to Comparative Example D2 are collectively shown in Table 4.

**Table 4**

| | Base particles | | Coating layer | | | T/D |
|---|---|---|---|---|---|---|
| | Composition | Average particle diameter D [µm] | Composition | Crystal phase | Thickness T [nm] | |
| Example D1 | LiCoO₂ | 7 | LiAlO₂ | α phase | 5.1 | 0.0007 |
| Example D2 | LiCoO₂ | 7 | LiAlO₂ | α phase | 23.9 | 0.0034 |
| Example D3 | LiCoO₂ | 7 | LiAlO₂ | α phase | 35.2 | 0.005 |
| Example D4 | LiNi_{0.5}Co_{0.2}Mn_{0.3}O₂ | 7 | LiAlO₂ | α phase | 28.8 | 0.0041 |
| Comparative Example D1 | LiCoO₂ | 7 | - | - | - | - |
| Comparative Example D2 | LiCoO₂ | 7 | Al₂O₃ | γ phase | 4.9 | 0.0007 |
| Comparative Example D3 | LiNi_{0.5}Co_{0.2}Mn_{0.3}O₂ | 7 | - | - | - | - |

### [10] Evaluation of Powder for Positive Electrode (2)

By using each of the α-phase lithium aluminate-coated positive electrode active material powders according to Examples D1 to D4 obtained as described above and the γ-phase Al₂O₃-coated positive electrode active material powder according to Comparative Example D2 obtained as described above, electrical measurement cells were produced as follows. Further, in the following description, a case where the α-phase lithium aluminate-coated positive electrode active material powder or the γ-phase Al₂O₃-coated positive electrode active material powder was used will be described, however, also with respect to Comparative Examples D1 and D3, electrical measurement cells were produced in the same manner except that the positive electrode active material powder was used in place of the α-phase lithium aluminate-coated positive electrode active material powder or the γ-phase Al₂O₃-coated positive electrode active material powder.

First, the α-phase lithium aluminate-coated positive electrode active material powder or the γ-phase Al₂O₃-coated positive electrode active material powder was powder mixed with acetylene black (DENKA BLACK, manufactured by Denka Company Limited) that is a conductive aid, and then, further a n-methylpyrrolidinone solution of 10 mass% polyvinylidene fluoride (manufactured by Sigma-Aldrich Japan) was added thereto, whereby a slurry was obtained. The content ratio of the α-phase lithium aluminate-coated positive electrode active material powder or the γ-phase Al₂O₃-coated positive electrode active material powder, acetylene black, and polyvinylidene fluoride in the obtained slurry was 90:5:5 in mass ratio.

Subsequently, the slurry was applied onto an aluminum foil and dried under vacuum, whereby a positive electrode was formed.

The formed positive electrode was punched into a disk shape with a diameter of 13 mm, and Celgard #2400 (manufactured by Asahi Kasei Corporation) as a separator was overlapped therewith. Then, an organic electrolyte solution containing LiPF₆ as a solute, and also containing ethylene carbonate and diethylene carbonate as nonaqueous solvents was injected, and as a negative electrode, a lithium metal foil manufactured by Honjo Metal Co., Ltd. was enclosed in a CR2032 coin cell, whereby an electrical measurement cell was obtained. As the organic electrolyte solution, LBG-96533 manufactured by Kishida Chemical Co., Ltd. was used.

Thereafter, the obtained electrical measurement cell was coupled to a battery charge-discharge evaluation system HJ1001SD8 manufactured by Hokuto Denko Corporation, and as CCCV charge and CC discharge, 0.2C: 8 cycles, 0.5C: 5 cycles, 1C: 5 cycles, 2C: 5 cycles, 3C: 5 cycles, 5C: 5 cycles, 8C: 5 cycles, 10C: 5 cycles, 16C: 5 cycles, and 0.2C: 5 cycles were performed. After cycles were repeated at the same C-rate, the charge-discharge characteristics were evaluated by a method of increasing the C-rate. The charge-discharge current at this time was set by calculation using 137 mAh/g as the actual capacity of LiCoO₂ and 160 mAh/g as the actual capacity of NCM523 based on the mass of the positive electrode active material of each cell.

The discharge capacity at 16C discharge in the fifth cycle is collectively shown in Table 5. It can be said that as this numerical value is larger, the charge-discharge performance at a high load is superior.

**Table 5**

| | Discharge capacity at 16C discharge in 5^{th} cycle [mAh] |
|---|---|
| Example D1 | 108 |
| Example D2 | 109 |
| Example D3 | 100 |
| Example D4 | 47 |
| Comparative Example D1 | 48 |
| Comparative Example D2 | 73 (However, capacity decreased at low load side) |
| Comparative Example D3 | 20 |

As apparent from Table 5, according to the present disclosure, excellent results were obtained. On the other hand, in Comparative Examples, satisfactory results could not be obtained. More specifically, in comparison of Examples D1 to D3 with Comparative Examples D1 and D2, in which LiCoO₂ particles were used as the positive electrode active material particles for a lithium-ion secondary battery, apparently excellent results were obtained in Examples D1 to D3 as compared with Comparative Examples D1 and D2. In comparison of Example D4 with Comparative Example D3, in which LiNi_{0.5}Co_{0.2}Mn_{0.3}O₂ particles were used as the positive electrode active material particles for a lithium-ion secondary battery, an apparently excellent result was obtained in Example D4 as compared with Comparative Example D3.

Further, α-phase lithium aluminate-coated positive electrode active material powders were produced in the same manner as in the above Examples D1 to D4 except that each of the precursor solutions of the above Examples A2 to A6 was used in place of the precursor solution of the above Example A1, and evaluation was performed in the same manner as in the above [10] with respect to the α-phase lithium aluminate-coated positive electrode active material powders, similar results to those of the above Examples D1 to D4 were obtained.

## Claims

1. A precursor solution, comprising:
an organic solvent;
a lithium oxoacid salt that shows solubility in the organic solvent; and
an aluminum compound that shows solubility in the organic solvent.

2. The precursor solution according to claim 1, wherein when a ratio between a content of aluminum and a content of lithium in a case of satisfying a stoichiometric formulation of the following compositional formula (1) is set as a reference, the content of lithium in the precursor solution is 1.00 times or more and 1.20 times or less with respect to the reference:
LiAlO₂ (1).

3. The precursor solution according to claim 1, wherein the aluminum compound is at least one of a metal salt compound and an aluminum alkoxide.

4. The precursor solution according to claim 3, wherein an amount of moisture in the precursor solution is 300 ppm or less.

5. The precursor solution according to claim 1, wherein the lithium oxoacid salt is lithium nitrate.

6. The precursor solution according to claim 1, wherein the organic solvent is nonaqueous and contains one type or two or more types selected from the group consisting of n-butyl alcohol, ethylene glycol monobutyl ether, butylene glycol, hexylene glycol, pentanediol, hexanediol, heptanediol, toluene, o-xylene, p-xylene, hexane, heptane, and octane.

7. A precursor powder, comprising multiple precursor particles constituted by a material containing an inorganic substance containing lithium, aluminum, and an oxoacid ion, wherein
the precursor powder has an average particle diameter of 400 nm or less.

8. A precursor powder, comprising multiple precursor particles obtained by subjecting the precursor solution according to claim 1 to a heating treatment.

9. The precursor powder according to claim 8, wherein the powder has an average particle diameter of 400 nm or less.

10. A method for producing an electrode, comprising:
an organic solvent removal step of removing the organic solvent by heating the precursor solution according to claim 1;
a molding step of molding a composition containing multiple precursor particles obtained through the organic solvent removal step, thereby obtaining a molded body; and
a firing step of firing the molded body, wherein
the composition to be subjected to the molding step contains active material particles.

11. The method for producing an electrode according to claim 10, further comprising an organic substance removal step of removing an organic substance contained in the composition obtained by removing the organic solvent from the precursor solution between the organic solvent removal step and the molding step.

12. The method for producing an electrode according to claim 10, wherein the composition to be subjected to the molding step further contains the active material particles in addition to the precursor particles.

13. The method for producing an electrode according to claim 10, wherein the composition to be subjected to the molding step contains particles having a coating layer formed at surfaces of the active material particles using the precursor solution according to claim 1 as the precursor particles.

14. The method for producing an electrode according to claim 10, wherein the active material in the electrode obtained through the firing step has a denseness of 60% or more.

15. An electrode produced by the method for producing an electrode according to claim 10.
